(19) Europäisches Patentamt
European Patent Office
Office européen des brevets

(11) EP 1 955 123 B1

(12) **EUROPEAN PATENT SPECIFICATION**

(45) Date of publication and mention of the grant of the patent:
**06.01.2010 Bulletin 2010/01**

(21) Application number: **05820636.8**

(22) Date of filing: **15.11.2005**

(51) Int Cl.:
***G06F 1/035*** *(2006.01)* ***G06F 7/52*** *(2006.01)*

(86) International application number:
**PCT/EP2005/012245**

(87) International publication number:
**WO 2007/057033 (24.05.2007 Gazette 2007/21)**

(54) **TABLE LOOKUP MULTIPLIER**

TABELLENNACHSCHLAG-VERVIELFACHER

MULTIPLICATEUR DE TABLE DE CONSULTATION

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**13.08.2008 Bulletin 2008/33**

(73) Proprietor: **TELEFONAKTIEBOLAGET LM ERICSSON (publ)**
**164 83 Stockholm (SE)**

(72) Inventor: **LUNDQVIST, Martin**
**S-431 66 Mölndal (SE)**

(74) Representative: **Vejgaard, Christian**
**Ericsson AB**
**Patent Unit Antennas & Microwaves**
**417 56 Göteborg (SE)**

(56) References cited:
**EP-A- 0 447 244** **US-A- 5 617 346**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Field of the invention

The present invention relates to an apparatus or arrangement for multiplying numbers in connection with digital data processing. In particular, the invention relates to a table comprising the products from a finite number of multiplicands and multipliers. Even more particular, the invention relates to the space or area occupied by such a table.

### Background of the invention

In connection with digital data processing, e.g. in Digital Signal Processing (DSP), there are frequently a need for multiplying various numbers to achieve certain functions or effects or other results, e.g. to accomplish different digital filters such as Finite Impulse Response (FIR-filters) etc, or to achieve different transforming operations such as the Fast Fourier Transform (FFT) etc. For such purposes there are a plurality of well known multipliers available in prior art, including multipliers implemented by software and multiplies implemented by hardware.

However, multipliers essentially implemented by software are in some situations to slow to fill the needs of modern digital signal processing, especially if the processing is performed in real-time. Therefore, in real-time applications and other applications in which the need for speed is crucial it is commonly preferred to use multipliers implemented by means of hardware, or at least essentially implemented by hardware.

Hardware multipliers in general are well known in the art. A hardware multiplier is commonly achieving a multiplication by means of a hardware-implemented algorithm. It is not uncommon that these algorithms replicates or imitates the human pen-and-paper way of performing a multiplication of two multi-digit numbers. Such algorithms may e.g. involve multiplying, shifting and adding. An example of a hardware multiplier is disclosed in the patent document US 5,617,346.

Figure 1 is a schematic illustration of the use of such an algorithm for multiplying two four-digit binary numbers *A* and *B*. As commonly known digit $B_0$ in the right most position of number *B* is first multiplying number *A* to form a first partial binary product $B_0$ x $A2^0$, wherein $2^0$ indicates that the least significant bit in the first partial product has the weight $2^0$. Digit $B_1$ in the next position of number *B* is then multiplying number *A* to form a second partial binary product $B_1$ x $A2^1$, wherein $2^1$ indicates that the least significant bit in the second partial product has the weight $2^1$. This is repeated in a well known manner until all digits in number *B* have multiplied number *A*. All the partial products are then properly shifted and added in a well known manner to form the final product *P,* as schematically illustrated in Figure 1. Naturally various hardware multipliers may use other algorithms and/or variants of the exemplifying algorithm now described.

As a contrast to the hardware multipliers essentially based on algorithms the present invention is directed to a lookup table comprising precalculated products corresponding to a finite number of multiplications.

The lookup table is typically a memory matrix, sized M rows times M columns (M equals $2^N$, with N as the 'bit resolution'), where M-1 is the largest multiplicand possible. The products from the finite number of multiplications are precalculated and stored in the appropriate memory cells of the memory matrix. Figure 2 shows a schematic illustration of an exemplifying multiplication memory matrix of the kind now discussed

The cells in the multiplication memory matrix shown in Figure 2 are typically arranged so that the cell in position m,n comprises the product of m x n, meaning that the cell in position 0,0 comprises the product of 0x0, whereas the cell in position 0,M-1 comprises the product of Ox(M-1) etc. The precalculated product of m x n can then be retrieved in a well known manner by addressing the cell in position m,n using an address containing the numbers m and n, or an address containing numbers that correspond to the numbers m and n.

For the sake of simplicity the content of the memory cells may be thought of as integers, however the same applies *mutatis mutandis* for other formats such as fixed notations or float notations etc.

The multiplication memory matrix as schematically illustrated in Figure 2 and similar memories or lookup tables are typically implemented on silicon or other materials that are suitable and commonly used for ordinary data memories or similar storage devices or DSP devices.

In general the multiplication memory matrixes or lookup tables schematically described above occupy a considerable area of silicon or similar material on which they are implemented. This is especially so when the value of the multiplicand M-1 is high, since this creates large matrix structures with large memory cells for comprising large numbers.

Consequently there is a need for an improved multiplication memory matrix or lookup table or similar that occupies a smaller area or space.

### Summary of the invention

The invention provides an improved multiplication memory apparatus or arrangement that occupies a smaller area or space.

This is accomplished by a multiplication arrangement comprising an address unit adapted to receive address words from an external system - e.g. an external digital signal processing system - wherein the address words have a first part comprising a first number X and a second part comprising a second number Y. The multiplication arrangement is also comprising a memory area having M x M memory cells or similar storage positions arranged to be addressed by said address words, wherein a cell addressed by a particular address word is provided with the product P of the first and the second number X and Y of the address in question. In addition, the multiplication arrangement comprises an output unit adapted to provide products P from the memory area to an external system - e.g. an external digital signal processing system.

The multiplication arrangement is **characterized in that** the cells in the memory area which are addressed by address words wherein Y < X have been removed, since these cells and the content therein are redundant due to the commutative property of the numbers being multiplied by the present invention. Hence, almost half of the memory area is removed. The address unit of the multiplication arrangement is arranged to swap the positions of said first and second address numbers X and Y in the address word if Y < X, and to forward the two swapped address numbers to the memo area.

The address unit may alternatively be arranged to swap the positions of the first half and the second half of said address word, which implies that certain embodiments of the invention may swap other parts of the address word than the two halves. It should be emphasised that the address unit may be integrated into the multiplication arrangement or arranged as an external unit that is directly or indirectly communicating with the multiplication arrangement.

A further embodiment of the reduced memory area as described above is **characterized in that** the content of the cells addressed by address words wherein X=Y have been moved so as to replace the content of the cells addressed by an address word wherein X = 0 and Y = Y. In other words, the content of the cells in the diagonal of the M x M memory area have been moved to replace the content of the cells in the column of the memory area wherein X=0, which enables a further reduction of the memory area.

This memory area is preferably utilized by an embodiment of the multiplication arrangement wherein said output unit is arranged to set the product P to zero when X = 0 or Y = 0.

This memory area can also be utilized by an embodiment of the multiplication arrangement wherein said address unit is arranged to swap the positions of said first and said second address numbers X and Y if Y < X, and arranged to set X to zero if X = Y, and further arranged to forward the address numbers X, Y to the memory area.

A further improvement of the memory area is possible, having the cells removed and moved as described above. This can be achieved by an embodiment wherein the content of cells in the memory area addressed by address words wherein X >= M / 2 have been moved to replace the content in cells addressed by address words wherein X = M - 1 - X and Y = M - 1 - Y. In other words, a section of the memory area is mirrored in the diagonal of the memory area.

This memory area can be utilized by an embodiment of the multiplication arrangement wherein said address unit is arranged to swap the positions of said first and said second address numbers X and Y if Y < X, and arranged to set X to zero if X = Y, and arranged to invert the first and second numbers X and Y if the MSB of the first number X is set, and further arranged to forward the address numbers X, Y to the memory area. This makes it possible to reduce the width of the address buses or similar addressing the memory area of the multiplication memory matrix. It will also make it possible to implement a more symmetric and compact memory area.

The invention is also providing a method for addressing a multiplication memory arrangement as described above.

This is accomplished by a method for addressing a multiplication arrangement comprising: an address unit adapted to receive address words from an external system, which address words have a first part comprising a first number X and a second part comprising a second number Y; a memory area comprising M x M memory cells arranged to be addressed by said address words, wherein a cell addressed by a particular address word is provided with the product P of the first and second number X and Y of the address word; and an output unit (330) adapted to provide products P from the memory area (320) to an external system. The method comprises the steps of: removing the cells in the memory area (310) being addressed by address words wherein Y < X; receiving an address word from said external system; swapping the positions of said first and second numbers X and Y in said address word if Y < X; and forwarding the numbers X, Y of the address word to the memory area.

An embodiment of the method comprises the step of: swapping the positions of the first half and the second half of the received address word; and forwarding the address word to the memory area.

Another embodiment of the method comprises the step of: setting the product P to zero when X = 0 or Y = 0; and forwarding the product P to the output unit (330).

Still another embodiment of the method applied to the memory area (310) defined in the method step above comprises the steps of: moving the content of the cells being addressed by address words wherein X=Y to cells being addressed by address words wherein X = 0 and Y = Y; setting the address number X in the received address word to zero if X = Y; and forwarding the address numbers X, Y to the memory area.

Still another embodiment of the method applied to the memory area (310) defined in the method steps above comprises the steps of: moving the content of the cells being addressed by address words wherein X >= M / 2 to replace the content of cells being addressed by address words wherein X = M - 1 - X and Y = M - 1 - Y; inverting the first and second numbers X and Y in the received address if the MSB of the first number X is set; and forwarding the address numbers X, Y to the memory area (310).

The invention will now bee described by means of exemplifying embodiments. However, it should be added that the invention is by no means limited to the embodiments not described. On the contrary, the invention is intended to comprise all embodiments covered by the scope of the appended claims. For example, even though the multiplication memory matrix may be illustrated as a regular quadratic matrix the invention is not limited to a certain physical design of the matrix. On the contrary, the cells of the matrix may be arranged in a row or in a circle or in some other suitable manner, including two dimensional structures as well as three dimensional structures. It should also be emphasized that the memory matrix may be implemented by means of a silicon structure or by means of any other suitable memory structure including magnetic or optical memory structures or any other suitable memory structure or media.

These and other aspects of the present invention will be apparent from the following description of embodiment (s) of the invention.

Brief description of the drawings

- Fig. 1 is a schematic illustration of a binary multiplication algorithm replicating or imitating the paper-and-pen algorithm commonly used by humans when multiplying two decimal numbers.
- Fig. 2 is a schematic illustration of an exemplifying lookup table implemented by means of a multiplication memory matrix.
- Fig. 3 is a schematic illustration of an exemplifying multiplication memory matrix 300.
- Fig. 4 is a table illustrating the links between the addresses, multiplicands, multipliers and products for the exemplifying multiplication memory matrix 300 in Figure 3.
- Fig. 5 illustrates the result from a swap of a first half and a second half of the word addressing the general multiplication memory matrix in Figure 2.
- Fig. 6 illustrates the result from a swap of a first half X and a second half Y of the word addressing the specific multiplication memory matrix 300 in Figure 3.
- Fig. 7 is the table in Fig. 4 amended so that the memory cells corresponding to the cells removed in the memory area 310 in Fig. 6 have been removed.
- Fig. 8 illustrates an exemplifying hardware design for implementing a swap of the X and Y values when Y<X in the 6-bit address word addressing the memory area 310.
- Fig. 9 illustrates an erasing of the zeroth column in the general multiplication memory matrix in Figure 5.
- Fig. 10 illustrates an erasing of the zeroth column in the memory area 310 of the specific multiplication memory matrix 300 in Figure 6.
- Fig. 11 illustrates an exemplifying hardware design for producing the product $x \cdot 0 = y \cdot 0 = 0$.
- Fig. 12 illustrates the general multiplication memory matrix in Fig. 9 having the content of the memory cells with an address value X=Y moved to the previously erased zeroth column.
- Fig. 13 illustrates the memory area 310 shown in Fig. 10 having the content of the memory cells with an address value X=Y moved to the previously erased zeroth column.
- Fig. 14 illustrates an exemplifying hardware design for implementing the move of the diagonal in the memory area 310 for the special cases when X=Y.
- Fig. 15 illustrates a mirroring in the diagonal of a part of the general multiplication memory matrix shown in Figure 12.
- Fig. 16 illustrates a mirroring in the diagonal of a part of the memory area 310 in the specific multiplication memory matrix 300 shown in Figure 13.
- Fig. 17 illustrates an exemplifying hardware design for implementing a mirroring in the diagonal of a part of the multiplication matrix 300.
- Fig. 18 is the table in Fig. 4 amended so that the memory cells corresponding to the cells removed in the memory area 310 in Fig. 16 have been removed.

Detailed description of preferred embodiments of the invention

The present invention will now be described in more detail with reference to exemplifying embodiments thereof. Further embodiments of the invention are clearly conceivable and the invention is by no means limited to the embodiments of a multiplication memory matrix (lookup table) described below. In the following the same or similar reference numbers indicate the same or similar objects and/or functions throughout the whole text and in the appended drawings.

Figure 3 shows a schematic illustration of an exemplifying multiplication memory matrix 300. The multiplication memory matrix 300 comprises a memory area 310, an address unit 320 and an output unit 330. The basic structure of the memory matrix 300 is preferably the same or at least very similar to the structure of an ordinary data memory implemented in a well known manner on a silicon structure or some other suitable hardware structure.

The memory area 310 in Figure 3 has been limited to 8 x 8 memory cells, i.e. eight rows times eight columns of memory cells, wherein 8 equals $2^3$, with 3 as the "bit resolution" and wherein 8-1=7 is the largest multiplicand possible. However, it should be understood that the memory area 310 may have M rows times M columns of memory cells, wherein M equals $2^N$, with N as the "bit resolution" and wherein M-1 is the largest multiplicand possible, e.g. as schematically illustrated in Figure 2.

The exemplifying address unit 320 is adapted to be connected to, and receive address signals or similar from, an external binary address-bus or similar of a digital data processing system or similar, e.g. in the same or very similar way as the address-bus of an ordinary data memory or similar addressable device. The address-bus connection is illustrated in Figure 3 by an arrow labeled 6a pointing to the address unit 320. The label 6a indicates that the exemplifying binary address-bus is six bits wide, which implies that the binary address-bus is capable of addressing $2^6$ = 64 memory cells, i.e. 8 x 8 cells.

The exemplifying output unit 330 is adapted to be connected to an binary data-bus of an external digital data processing system for providing products of multiplications from the multiplication memory matrix 300 to said data-bus of said external system. In other words, the output unit 330 is adapted to be connected to an external data-bus in the same or similar way as the output data signals of an ordinary data memory or similar storing device. The data-bus connection is illustrated in Figure 3 by an arrow labeled 6p pointing away from the output unit 330. The label 6p indicates that the exemplifying binary data-bus is six bits wide, which implies that the data-bus is capable of transferring a product from the exemplifying multiplication memory matrix 300 being as large as 63 (binary 111111). The output unit 330 receives the products to be outputted from the memory area 310 via an internal data-bus, which has been illustrated in Figure 3 by an arrow labeled 6p pointing away from the memory area 310 and towards the output unit 330. This label 6p indicates that communication is six bits wide. In addition, the output unit 330 may also be provided with the 6-bit address-bus mentioned above, which will be further explained below. This has been illustrated in Figure 3 by a dashed line labeled 6a and pointing towards the output unit 330.

The basic function of the exemplifying multiplication memory matrix 300 in Figure 3 is similar to the function of an ordinary data memory. Hence, when an address value is written to the address unit 320 a cell in the memory area 310 will be addressed and the content presently stored in the particular cell can be written to an external binary data-bus via the output unit 330. Consequently, the basic function of the memory matrix 300 in Figure 3 enables a multiplication function to be achieved, provided that a product corresponding in a certain way to a particular address is pre-stored in the memory cell addressed by this particular address.

The addressing of the memory area 310 in the exemplifying multiplication memory matrix 300 in Figure 3 is schematically illustrated by a first and a second arrow pointing away from the address-block 320 and towards the memory area 310. The label 3 on each of the two arrows indicates that the exemplifying 6-bit address-bus mentioned above has been divided in half by the address-block 320 resulting in two buses or sections each comprising 3-bits. The 3-bits represented by the first arrow carries the multiplicand and the 3-bits represented by the second arrow carries the multiplier, or the other way around. Hence, the two arrows in Figure 3 is schematically illustrating that a first half of the 6-bit address-buss represents the multiplicand and the other half of the 6-bit address-bus represents the multiplier, or the other way around.

As already indicated above, it follows that a multiplication function can be achieved by pre-storing in the cell that will be addressed by a particular 6-bit address the product of the number represented by the 3-bits in the first half of the 6-bit address and the number represented by the 3-bits in the second half of the 6-bit address.

In other words, the individual cells of the multiplication memory matrix 300 in Figure 3 are each provided with the product corresponding to the multiplicand and multiplier found in the first and the second half of their particular address.

Accordingly, the 8x8 memory cells schematically illustrated in the memory area 310 have been labeled with their respective multiplication, such that a cell addressed by X,Y is labeled XxY, i.e. the cell addressed by the address 0,0 is labeled 0x0 and the cell addressed by 1,1 is labeled 1 x1 etc. The X,Y notation represents the address defined by the 6-bit address received from the 6-bit address-bus 6p in Figure 3, wherein X represents the value of the first half of the 6-bit address and Y represents the value of the second half of the 6-bit address, or possibly the other way around.

For the sake of simplicity the content of the memory cells in the memory area 310 may be thought of as integers, however the same applies *mutatis mutandis* for other formats such as fixed notations or float notations etc.

Figure 4 shows a table illustrating the relation between the addresses, the multiplicands, the multipliers and the products for the exemplifying multiplication memory matrix 300 in Figure 3. At the upper left end of the table is an upper box labeled "Address-Bus (6 bits, binary)", which indicates that the two columns below comprise the binary values of the address received on the 6-bit address-bus 6a in Figure 3. Directly below said upper box there are two boxes of which the left box is labeled "1st half (3 bits binary)" and the right box is labeled "2nd half (3 bits binary)". This indicates that the binary bits of the received 6-bit address has been divided into two groups each comprising 3 bits. To the right of said upper box there are four upper boxes. The first box is labeled "Addr.", the second "M1", the third "M2" and the fourth "P". The abbreviation "Addr." represents the cell address in the memory matrix 300. The abbreviation "M1" and "M2" represent the multiplicand or multiplier, which multiplier and multiplicand are found in said first and second half of the address received from the 6-bit address-bus. The abbreviation "P" represents the product of said multiplicand and multiplier found in said first and second half of said address. Hence, the columns following below the boxes "Addr.", "M1", "M2" and "P" comprise values of the relevant addresses, the multiplicand/multiplier corresponding to these addresses, and the products of the multiplicands/multipliers in question. Below the boxes now referred to there is a row labeled "C0". A similar row is repeated in every ninth row of the table in Figure 4, which rows are labeled "Cn" where n is increased by one for every occurrence. These rows correspond to the columns 0 to 7 in the exemplifying memory area 310 in Figure 3 and the different values below each row "Cn" (n=1-7) in the table of Figure 4 correspond to the addresses, multiplicands, multipliers and products of the cells in the corresponding column of the memory area 310 in Figure 3.

The invention is based on the observation that the addressing and storing of products in the multiplication memory matrix 300 is inefficient. Improvements of these conditions will now be described with reference to embodiments of the present invention.

As a starting point when describing an embodiment of the present invention it is observed that two arbitrary elements *x* and *y* of a set *S* are said to be commutative under a binary operation * if they satisfy:

$$x * y = y * x \quad (1)$$

Ordinary numbers such as integers etc are commutative under addition

$$x + y = y + x \quad (2)$$

and under multiplication

$$x \cdot y = y \cdot x \quad (3)$$

This observation makes it possible to reduce the size of the multiplication memory matrix 300 shown in Figure 3 by means of some specific steps, which accomplish a modified and size-reduced multiplication memory matrix as will be described in more detail below.

*Divide in the diagonal*

The fact that a multiplication of two numbers is commutative implies that almost half of the matrix 300 in Figure 3 is a duplicate of the other half, i.e. almost every product occurs twice in the matrix 300. This can be easily established by looking at the memory area 310 of the exemplifying multiplication memory matrix 300 in Figure 3, wherein almost every multiplication occurs twice. The same can be easily established by looking at the table in figure 4 illustrating the relation between the addresses, multiplicands, multipliers and products in the memory area 310 in Figure 3, in which table almost every product "P" occurs twice.

Hence, due to the commutative property of the numbers in question almost half of the matrix 300 is redundant and it should therefore be possible to reduce the matrix 300 by half or almost half.

This can be accomplished if the above mentioned address values X and Y are always swapped when Y < X, which is a rather straight forward logic operation. Applied to the 6-bit address bus in the exemplifying multiplication memory matrix 300 this means that when the value X in the 1 st half (3-bits) of the 6-bit bus is larger than the value Y in the 2nd half (3-bits) of the 6-bit bus a swap is performed on the two address values, which consequently exchange positions. A result of the swap is that the same 6-bit address is always pointed out regardless if the value in the 1st half is m and the value in the 2nd half is n, or if the value in the 1 st half is n and the value in the 2nd half is m. This is clearly acceptable since the numbers X and Y are commutative implying that the product $x \cdot y$ is the same as the product $y \cdot x$.

Figure 5 illustrates the result from the swap described above performed on the general multiplication memory matrix previously shown in Figure 2, wherein $2^M$ memory cells can be addressed by a binary address word being M bits wide. As can be seen, all memory cells are removed having an address value X in the 1st half of an address word addressing the matrix that is larger than the address value Y in the 2nd half of said address word. This is illustrated by shading the removed cells with diagonal lines.

Figure 6 shows the memory area 310 of the specific exemplifying multiplication memory matrix 300 previously shown in Figure 3, wherein $2^6$ memory cells can be addressed by a binary address word being 6-bits wide. As can be seen, all memory cells are removed having an address value X in the 1 st half of the binary word addressing the memory area 310 that is larger than the address value Y in the 2nd half of the binary address word. This is illustrated by double over striking lines in the removed cells.

The table in Figure 7 is the same as the table previously shown in Figure 4. However, the memory cells having the same addresses as the cells that are removed in the memory area 310 in Figure 6 have also been removed in the table in Figure 7. This is illustrated by double over striking lines in the removed cells.

Figure 8 is a schematic illustration of an exemplifying hardware design for implementing the above mentioned swap of the X and Y values of the 6-bit address-bus in the matrix 300 when Y<X. It is preferred that the hardware design and the swap function are a part of the address unit 320, though other solutions are clearly conceivable. The hardware design in Figure 8 comprises a swap section 810 and a comparing section 820. The swap section 810 is provided with the 6-bit address-bus and it is arranged to swap the values of X and Y with the effect that these values can be outputted on either one of the two 3-bit output buses from the address unit 320. The comparing section 820 is likewise provided with the 6-bit address-bus and it is arranged to compare the X and Y values and to actuate the swapping section to swap X and Y when Y < X. The actuating has been illustrated by a dashed line extending from the comparing section 820 through the six two-way switches in the swap section 810. It should be added that even if a hardware design is preferred for implementing the swap now described other embodiments of the invention may implement the swap by means of a fully or at least partly software-based design. This is especially so if the application is not time critical, which e.g. may be the case for applications that are not performed in real time.

*Erase the Zeroth Column*

Now, as it is true that $x{\cdot}0 = y{\cdot}0 = 0$ the zeroth *row* and zeroth *column* can be removed in the general multiplication memory matrix in Figure 2 and 5, since no calculations for these cases are needed. However, the zeroth *row* has already been removed by the swapping operation described above, so there is only the zeroth *column* to remove.

Figure 9 illustrates the erasing of the zeroth column in the general multiplication memory matrix previously shown in Figure 5. As can be seen the content of the memory cells having an address value X=0 have been erased. The memory cells previously removed from the general matrix by the swap operation is shaded by dots and the zeroth column now erased is shaded by diagonal lines. Note that the cells in the zeroth column are erased but not removed, since they will be used in subsequent steps as will be further explained below.

Figure 10 illustrates an erasing of the zeroth column in the memory area 310 of the specific multiplication memory matrix 300 previously shown in Figure 6. As can be seen the content of the memory cells having an address value X=0 have been erased. The memory cells previously removed from the matrix 300 by the swap operation and the zeroth column now erased are marked with double over-striking lines Note that the cells in the zeroth column are erased but not removed, since they will be used in subsequent steps as will be further explained below.

Figure 11 is a schematic illustration of an exemplifying hardware design for producing the product $x{\cdot}0 = y{\cdot}0 = 0$. This can e.g. be accomplished by utilizing a switching section 1110 and a comparing section 1120. It is preferred that the switching section 1110 and the comparing section 1120 are a part of the output unit 330, though other solutions are clearly conceivable. The switching section 1110 is provided with a binary zero signal illustrated by a ground symbol and the product data form the memory area 310. The switching section 1110 is further arranged to send out binary zeroes on the 6-bit data-bus in a first switching position and to send out the binary product data on the 6-bit data-bus in a second switching position. The comparing section 1120 in the output unit 330 is in turn provided with the addresses from the 6-bit address-bus as schematically illustrated in Figure 3 and it is arranged to compare the X and Y values of the addresses and to actuate the switching section 1110 so as to send out binary zeroes on the 6-bit data-bus if X=0 or Y=0, and to otherwise send out the binary product data received from the memory area 310 to the 6-bit data-bus. The actuating is illustrated by a dashed line extending from the comparing section 1120 through the six two-way switches in the switching section 1110. It can be observed that there is no need to address the memory area 310 to accomplish the multiplication $x{\cdot}0 = y{\cdot}0 = 0$. It should also be added that even if a hardware design is preferred for implementing the switching now described other embodiments of the invention may implement the switch by means of a fully or at least partly software-based design. This is especially so if the application is not time critical, which e.g. may be the case for applications that are not performed in real time.

*Move the Diagonal to the Erased Zeroth Column*

Erasing the content of the relatively few elements in the zeroth column as discussed above may seem unnecessary. However, this is not so as will now be explained.

There is a special case so far omitted, namely the occasions when the above mentioned values X=Y. This must be taken care of, since a multiplication memory matrix of the kind now discussed will otherwise be too large. The solution is to map this special case (X=Y) into the memory cells of the zeroth column that was previously erased according to the discussion above. This can be accomplished by setting X=0 if X=Y, also a fast and easy logical operation. The relevant products are accordingly moved to the new address.

Figure 12 illustrates the general multiplication memory matrix previously shown in Figure 9. As can be seen, the content of the memory cells having an address value X=Y have been moved to the previously erased zeroth column. This results in a leftward horizontal movement in the memory matrix in Figure 12, which is indicated by an arrow pointing to the left. In Figure 12 the memory cells previously removed by the swap operation are shaded by dots. The diagonal now moved to the zeroth column is shaded by diagonal lines, whereas the zeroth column is shaded by perpendicular diagonal lines forming a square pattern.

Figure 13 illustrates the memory area 310 of the specific multiplication memory matrix 300 previously shown in Figure 10. As can be seen, the content of the memory cells having an address value X=Y have been moved to the corresponding memory cells having the same address value Y but the new address value X=0 instead of X=Y. This is illustrated by double over striking lines in the erased cells in the diagonal of the memory area 310.

Figure 14 is a schematic illustration of an exemplifying hardware design for implementing the above described moving of the diagonal in the special case when X=Y. This can e.g. be accomplished by utilizing a switching section 1410 and a comparing section 1420 as shown in Figure 14. It is preferred that the switching section 1410 and the comparing section 1420 are a part of the address-block unit 320, though other solutions are clearly conceivable. The switching section 1410 is provided with a binary zero signal illustrated by a ground symbol, and the addresses from the 6-bit address bus comprising the values X and Y as previously described. The switching section 1410 is arranged to switch the value of X between binary zero and the actual value of X received from the 6-bit address-bus. The comparing section 1420 is likewise provided with the addresses from the 6-bit address-bus and it is arranged to compare the values X and Y, and to actuate the switching section 1410 so as to set the value of X to binary zero when X=Y and to otherwise let the value of X pass unaffected. The actuating is illustrated by a dashed line extending from the comparing section 1420 through the three switches in the switching section 1410. It should be added that even if a hardware design is preferred for implementing the switching now described other embodiments of the invention may implement the switch by means of a fully or at least partly software-based design. This is especially so if the application is not time critical, which e.g. may be the case for applications that are not performed in real time.

As can be seen in Figure 14 the X and Y values of the 6-bit address bus are provided to the switching section 1410 via the previously described swapping section 810, which is in order since the swapping section leaves the X and Y values unaffected when X=Y, whereas the switching section 1410 leaves the X and Y values unaffected except when X=Y.

The above described moving of the memory cells from the diagonal to the zeroth column of the memory area 310 in Figure 13 correspond to the following rearrangement in table format:

| Address-Bus (6 bits, binary) | | Addr. | M1 | M2 | P |
|---|---|---|---|---|---|
| X | Y | | | | |
| C0 | | | | | |
| 000 | 001 | 1 | ~~0~~ 1 | 1 | ~~0~~ 1 |
| 000 | 010 | 2 | ~~0~~ 2 | 2 | ~~0~~ 4 |
| 000 | 011 | 3 | ~~0~~ 3 | 3 | ~~0~~ 9 |
| 000 | 100 | 4 | ~~0~~ 4 | 4 | ~~0~~ 16 |
| 000 | 101 | 5 | ~~0~~ 5 | 5 | ~~0~~ 25 |
| 000 | 110 | 6 | ~~0~~ 6 | 6 | ~~0~~ 36 |
| 000 | 111 | 7 | ~~0~~ 7 | 7 | ~~0~~ 49 |
| | | | | | |
| C1 | | | | | |
| ~~001~~ | ~~001~~ | ~~9~~ | ~~1~~ | ~~1~~ | ~~1~~ |
| C02 | | | | | |
| ~~010~~ | ~~010~~ | ~~18~~ | ~~2~~ | ~~2~~ | ~~4~~ |
| C03 | | | | | |
| ~~011~~ | ~~011~~ | ~~27~~ | ~~3~~ | ~~3~~ | ~~9~~ |
| C04 | | | | | |
| ~~100~~ | ~~100~~ | ~~36~~ | ~~4~~ | ~~4~~ | ~~16~~ |
| C05 | | | | | |
| ~~101~~ | ~~101~~ | ~~45~~ | ~~5~~ | ~~5~~ | ~~25~~ |
| C06 | | | | | |
| ~~110~~ | ~~110~~ | ~~54~~ | ~~6~~ | ~~6~~ | ~~36~~ |
| C07 | | | | | |
| ~~111~~ | ~~111~~ | ~~63~~ | ~~7~~ | ~~7~~ | ~~49~~ |

The table is a fragment of the table in Figure 7. The memory cells provided with new values in the memory area 310 shown in Figure 13 have also received new values in the above table, and the memory cells removed in the memory area 310 have also been erased in the above table. Erased values and erased cells are illustrated by double over-striking lines in the table and new values have been added next to the erased values where appropriate. The removed cells can be found below the shaded line in the table, whereas the new values are inserted in the cells above the shaded line.

*Mirror in the Diagonal*

The multiplication memory matrix accomplished so far still uses almost the full span of rows and columns, though more than half of the matrix is now removed. This is disadvantageous in many occasions especially considering that broader address-buses require more space than narrower buses in connection with silicon constructions etc. A further improvement can therefore be achieved by moving and refitting the upper right triangle of the general multiplication memory matrix in Figure 12 into an empty area of the same size.

In Figure 15 this rearranging of the modified general multiplication memory matrix previously shown in Figure 12 has been illustrated by a curved arrow indication the moving direction of the memory cells. The movement indicated in Figure 15 corresponds to a mirroring in the diagonal of the memory matrix. This can be achieved by letting the column $X = M - 1 - X$ and the row $Y = M - 1 - Y$, when $X >= M / 2$ in the multiplication memory matrix accomplished so far, i.e. the general multiplication memory matrix as illustrated in Figure 12. Speaking in binary terms, this equals inverting X and Y when MSB of X is set, an easy logical operation.

Figure 16 illustrates the mirroring in the diagonal of the memory area 310 in the specific multiplication memory matrix 300 previously shown in Figure 13. In table format the following rearrangements have been made:

| Address-Bus (6 bits, binary) | | Addr. | M1 | M2 | P |
|---|---|---|---|---|---|
| X | Y | | | | |
| C1 | | | | | |
| 001 | 000 | 8 | ~~1~~ 6 | ~~0~~ 7 | ~~0~~ 42 |
| C2 | | | | | |
| 010 | 000 | 16 | ~~2~~ 5 | ~~0~~ 7 | ~~0~~ 35 |
| 010 | 001 | 17 | ~~2~~ 5 | ~~1~~ 6 | ~~2~~ 30 |
| C3 | | | | | |
| 011 | 000 | 24 | ~~3~~ 4 | ~~0~~ 7 | ~~0~~ 28 |
| 011 | 001 | 25 | ~~3~~ 4 | ~~1~~ 6 | ~~3~~ 24 |
| 011 | 010 | 26 | ~~3~~ 4 | ~~2~~ 5 | ~~6~~ 20 |
| | | | | | |
| C4 | | | | | |
| ~~100~~ | ~~101~~ | ~~37~~ | ~~4~~ | ~~5~~ | ~~20~~ |
| ~~100~~ | ~~110~~ | ~~38~~ | ~~4~~ | ~~6~~ | ~~24~~ |
| ~~100~~ | ~~111~~ | ~~39~~ | ~~4~~ | ~~7~~ | ~~28~~ |
| C5 | | | | | |
| ~~101~~ | ~~110~~ | ~~46~~ | ~~5~~ | ~~6~~ | ~~30~~ |
| ~~101~~ | ~~111~~ | ~~47~~ | ~~5~~ | ~~7~~ | ~~35~~ |
| C6 | | | | | |
| ~~110~~ | ~~111~~ | ~~55~~ | ~~6~~ | ~~7~~ | ~~42~~ |

The above table is a fragment of the table in Figure 7. The memory cells provided with new values in the memory area 310 shown in Figure 16 have also received new values in the above table, and the memory cells removed in the memory area 310 have also been removed in the above table. Removed values and removed cells are illustrated by double over-striking lines in the table and new values have been added next to the erased values where appropriate. The removed cells can be found below the shaded row in the table, whereas the new values are inserted in the cells above the shaded row.

Figure 17 is a schematic illustration of an exemplifying hardware design for implementing the above described mirroring in the memory area 310 of the specific multiplication memory matrix 300. This can e.g. be accomplished by utilizing an inverting section 1710 and a detecting section 1720 as shown in Figure 17. It is preferred that the inverting section 1710 and the detecting section 1720 are a part of the address unit 320, though other solutions are clearly conceivable. The inverting section 1710 is provided with a modified version denoted 6a' of the original addresses on the 6-bit address bus denoted 6a. The modified version 6a' is accomplished by swapping the X and Y values of the 6-bit address whenever Y<X and by setting the above mentioned X-values in the 6-bit address bus to zero whenever X=Y, as previously described above. The inverting section 1710 is further arranged to switch between outputting the modified address 6a' and outputting an *inverted* version of the modified address 6a'. The comparing section 1720 is provided with the MSB of the X-values in the modified address 6a' and it is arranged to actuate a switch in the inverting section 1710 so as to output the modified address 6a' when the MSB of the X-value in the intermediate address 6a' is binary zero (0) and to output an inverted version of the intermediate address 6a' when the MSB of the X-value in the intermediate address 6a' is binary one (1). The actuating is illustrated by a dashed line extending from the comparing section 1720 through the 6-bit switch in the switching section 1710. It should be added that even if a hardware design is preferred for implementing the inverting now described other embodiments of the invention may implement the inverting function by means of a fully or at least partly software-based design. This is especially so if the application is not time critical, which e.g. may be the case for applications that are not performed in real time.

The table in Figure 18 is the same as the table previously shown in Figure 7. However, the memory cells provided with new values in the memory area 310 as discussed above have also received new values in this table, and the memory cells removed or erased in the memory area 310 have likewise been removed or erased in this table. Erased values and removed cells are illustrated by double over-striking lines in the table and new values have been added next to the erased values where appropriate.

From the above described embodiments of the present invention and as can be seen in the table of Figure 18 it should be clear that a reduction of more than 50% of the memory matrix size is possible, especially when utilizing a hardware multiplier.

Reference signs

| | |
|---|---|
| 300 | Multiplication Memory Matrix |
| 310 | Memory Area |
| 320 | Address Unit |
| 330 | Output Unit |
| 810 | Swapping Section |
| 820 | Comparing Section |
| 1110 | Switching Section |
| 1120 | Comparing Section |
| 1410 | Switching Section |
| 1420 | Comparing Section |
| 1710 | Inverting Section |
| 1720 | Detecting Section |
| 6a | 6-bit Address-Bus |
| 6a' | 6-bit Modified Address-Bus |
| 6a" | 6-bit Modified Address-Bus |
| 6a'" | 6-bit Modified Address-Bus |
| 6p | 6-bit Data-Bus |

## Claims

**1.** A multiplication apparatus (300) comprising:

- an address unit (320) adapted to receive address words from an external system, which address words have a first part comprising a first number X and a second part comprising a second number Y,
- a memory area (310) comprising M x M memory cells arranged to be addressed by said address words, wherein a cell addressed by a particular address word is provided with the product P of the first and second number X and Y, and
- an output unit (330) adapted to provide products P from the memory area (320) to an external system,

***characterized in that:***

- the cells in the memory area (310) addressed by address words wherein Y < X have been removed; and that
- said address unit (320) is arranged to swap the positions of said first and second address numbers X and Y if Y < X, and to forward the address numbers X, Y to the memory area (310).

**2.** A multiplication apparatus (300) according to claim 1,
***characterized in that:***
the content of the cells in the memory area (310) addressed by address words wherein X=Y have been moved to replace the content of the cells addressed by an address word wherein X = 0 and Y = Y.

**3.** A multiplication apparatus (300) according to claim 1 or 2,
***characterized in that:***

the content of cells in the memory area (310) addressed by address words wherein X >= M / 2 have been moved to replace the content of cells addressed by address words whereinX=M-1-XandY=M-1-Y.

**4.** A multiplication apparatus (300) according to claim 1,
***characterized in that:***

said address unit (320) is arranged to swap the positions of the first half of the address word and the second half of the address word, and to forward the address word to the memory area (310).

**5.** A multiplication apparatus (300) according to claim 2,
***characterized in that:***

the output unit (330) is arranged to set the product P to zero when X = 0 or Y = 0.

**6.** A multiplication apparatus (300) according to claim 2,
***characterized in that:***

said address unit (320) is arranged to

- swap the positions of said first and said second address numbers X and Y if Y < X, and set X to zero if X = Y, and
- forward the address numbers X, Y to the memory area (310).

**7.** A multiplication apparatus (300) according to claim 3,
***characterized in that:***

said address unit (320) is arranged to

- swap the positions of said first and said second address numbers X and Y if Y < X, set X to zero if X = Y,
- invert the first and second numbers X and Y if the MSB of the first number X is set, and
- forward the address numbers X, Y to the memory area (310).

**8.** A method for addressing a multiplication apparatus (300) comprising:

- an address unit (320) adapted to receive address words from an external system, which address words have a first part comprising a first number X and a second part comprising a second number Y,
- a memory area (310) comprising M x M memory cells arranged to be addressed by said address words, wherein a cell addressed by a particular address word is provided with the product P of the first and second number X and Y of the address word, and
- an output unit (330) adapted to provide products P from the memory area (320) to an external system,

comprising the steps of:
- removing the cells in the memory area (310) being addressed by address words wherein Y < X,
- receiving an address word from said external system,
- swapping the positions of said first and second numbers X and Y in said address word if Y < X, and
- forwarding the numbers X, Y of the address word to the memory area (310).

**9.** A method according to claim 8,
comprising the step of:

swapping the positions of the first half and the second half of the received address word.

**10.** A method according to claim 8 or 9,
comprising the step of: .

- setting the product P to zero when X = 0 or Y = 0 and
- forwarding the Product P to the output unit (330).

**11.** A method according to claim 8,
comprising the steps of:

- moving the content of the cells in the memory area (310) being addressed by address words wherein X=Y to cells being addressed by address words wherein X = 0 and Y = Y,
- setting the address number X in the received address word to zero if X = Y,
- forwarding the address numbers X, Y to the memory area (310).

**12.** A method according to claim 11,
comprising the steps of:

- moving the content of the cells being addressed by address words wherein X >= M / 2 to replace the content of cells being addressed by address words wherein X = M - 1 - X and Y=M-1-Y.

- inverting the first and second numbers X and Y in the received address if the MSB of the first number X is set,
- forwarding the address numbers X, Y to the memory area (310).

## Patentansprüche

1. Multiplikationsvorrichtung (300), umfassend:

   - eine Adresseinheit (320), die entsprechend angepasst ist, um Adresswörter von einem externen System zu empfangen, wobei diese Adresswörter einen ersten Teil, der eine erste Zahl X umfasst, und einen zweiten Teil, der eine Zahl Y umfasst, haben,
   - einen Speicherbereich (310), der M x M Speicherzellen umfasst, die entsprechend eingerichtet sind, um durch die Adresswörter adressiert zu werden, wobei eine Zelle, die durch ein bestimmtes Adresswort adressiert wird, mit dem Produkt P der ersten und zweiten Zahl X und Y versehen ist, und
   - eine Ausgabeeinheit (330), die entsprechend angepasst ist, um Produkte P aus dem Speicherbereich (320) an ein externes System zu übergeben,

   **dadurch gekennzeichnet, dass:**
   - die Zellen in dem Speicherbereich (310) durch Adresswörter adressiert werden, wobei Y<X entfernt worden sind; und dass
   - die Adresseinheit (320) entsprechend eingerichtet ist, um die Positionen der ersten und zweiten Adresszahl X und Y zu vertauschen, wenn Y<X, und die Adresszahlen X, Y in den Speicherbereich (310) weiterzuleiten.

2. Multiplikationsvorrichtung (300) nach Anspruch 1,
   **dadurch gekennzeichnet, dass:**

   der Inhalt der Zellen in dem Speicherbereich (310), die durch Adresswörter adressiert werden, wobei X=Y, verschoben worden ist, um den Inhalt der Zellen zu ersetzen, die durch ein Adresswort adressiert werden, wobei X=0 und Y=Y.

3. Multiplikationsvorrichtung (300) nach Anspruch 1 oder 2,
   **dadurch gekennzeichnet, dass:**

   der Inhalt von Zellen in dem Speicherbereich (310), die durch Adresswörter adressiert werden, wobei X≥M/2, verschoben worden ist, um den Inhalt der Zellen zu ersetzen, die durch Adresswörter adressiert werden, wobei X=M-1-X und Y=M-1-Y.

4. Multiplikationsvorrichtung (300) nach Anspruch 1,
   **dadurch gekennzeichnet, dass:**

   die Adresseinheit (320) entsprechend eingerichtet ist, um die Positionen der ersten Hälfte des Adressworts und der zweiten Hälfte des Adressworts zu vertauschen und das Adresswort in den Speicherbereich (310) weiterzuleiten.

5. Multiplikationsvorrichtung (300) nach Anspruch 2,
   **dadurch gekennzeichnet, dass:**

   die Ausgabeeinheit (320) entsprechend eingerichtet ist, um das Produkt P auf null zu setzen, wenn X=0 oder Y=0.

6. Multiplikationsvorrichtung (300) nach Anspruch 2,
   **dadurch gekennzeichnet, dass:**

   die Adresseinheit (320) entsprechend eingerichtet ist, um

   - die Positionen der ersten und der zweiten Adresszahl X und Y zu vertauschen, wenn Y<X, und X auf null zu setzen, wenn X=Y, und
   - die Adresszahlen X, Y in den Speicherbereich (310) weiterzuleiten.

7. Multiplikationsvorrichtung (300) nach Anspruch 3,

**dadurch gekennzeichnet, dass:**

die Adresseinheit (320) entsprechend eingerichtet ist, um

- die Positionen der ersten und der zweiten Adresszahl X und Y zu vertauschen, wenn Y<X, und X auf null zu setzen, wenn X=Y,
- die erste und zweite Zahl X und Y zu invertieren, wenn das MSB der ersten Zahl X gesetzt ist, und
- die Adresszahlen X, Y in den Speicherbereich (310) weiterzuleiten.

**8.** Verfahren zum Adressieren einer Multiplikationsvorrichtung (300), umfassend:

- eine Adresseinheit (320), die entsprechend angepasst ist, um Adresswörter von einem externen System zu empfangen, wobei diese Adresswörter einen ersten Teil, der eine erste Zahl X umfasst, und einen zweiten Teil, der eine zweite Zahl Y umfasst, haben,
- einen Speicherbereich (310), der M x M Speicherzellen umfasst, die entsprechend eingerichtet sind, um durch die Adresswörter adressiert zu werden, wobei eine Zelle, die durch ein bestimmtes Adresswort adressiert wird, mit dem Produkt P der ersten und zweiten Zahl X und Y des Adressworts versehen ist, und
- eine Ausgabeeinheit (330) entsprechend angepasst ist, um Produkte P aus dem Speicherbereich (320) an ein externes System zu übergeben,

umfassend die folgenden Schritte:
- Entfernen der Zellen in dem Speicherbereich (310), die durch Adresswörter adressiert werden, wobei Y<X,
- Empfangen eines Adressworts von dem externen System,
- Vertauschen der Positionen der ersten und zweiten Zahl X und Y in dem Adresswort, wenn Y<X, und
- Weiterleiten der Zahlen X, Y des Adressworts in den Speicherbereich (310).

**9.** Verfahren nach Anspruch 8,
umfassend den folgenden Schritt:

Vertauschen der Positionen der ersten Hälfte und der zweiten Hälfte des empfangenen Adressworts.

**10.** Verfahren nach Anspruch 8 oder 9,
umfassend die folgenden Schritte:

- Setzen des Produkts P auf null, wenn X=0 oder Y=0, und
- Weiterleiten des Produkts P an die Ausgabeeinheit (330).

**11.** Verfahren nach Anspruch 8,
umfassend die folgenden Schritte:

- Verschieben des Inhalts der Zellen in dem Speicherbereich (310), die durch Adresswörter adressiert werden, wobei X=Y, in Zellen, die durch Adresswörter adressiert werden, wobei X=0 und Y=Y,
- Setzen der Adresszahl X in dem empfangenen Adresswort auf null, wenn X=Y,
- Weiterleiten der Adresszahlen X, Y in den Speicherbereich (310).

**12.** Verfahren nach Anspruch 11,
umfassend die folgenden Schritte:

- Verschieben des Inhalts der Zellen, die durch Adresswörter adressiert werden, wobei X≥M/2, um den Inhalt von Zellen zu ersetzen, die durch Adresswörter adressiert werden, wobei X=M-1-X und Y=M-1-Y,
- Invertieren der ersten und zweiten Zahl X und Y in der empfangenen Adresse, wenn das MSB der ersten Zahl X gesetzt ist,
- Weiterleiten der Adresszahlen X, Y in den Speicherbereich (310).

## Revendications

**1.** Dispositif de multiplication (300) comprenant :

- une unité d'adresse (320) adaptée pour recevoir des mots d'adresse d'un système externe, lesquels mots d'adresse ont une première partie comprenant un premier nombre X et une deuxième partie comprenant un deuxième nombre Y,
- une zone de mémoire (310) comprenant M x M cellules de mémoire agencées pour être adressées par lesdits mots d'adresse, dans lequel une cellule adressée par un mot d'adresse particulier est pourvue du produit P des premier et deuxième nombres X et Y, et
- une unité de sortie (330) adaptée pour fournir des produits P de la zone de mémoire (320) à un système externe,

**caractérisé en ce que**

- les cellules dans la zone de mémoire (310) adressées par des mots d'adresse dans lesquels Y < X ont été retirées ; et **en ce que**
- ladite unité d'adresse (320) est agencée pour échanger les positions desdits premier et deuxième nombres d'adresse X et Y si Y < X, et pour réacheminer les nombres d'adresse X, Y vers la zone de mémoire (310).

**2.** Dispositif de multiplication (300) selon la revendication 1,
**caractérisé en ce que**
les contenus des cellules dans la zone de mémoire (310) adressées par des mots d'adresse dans lesquels X = Y ont été déplacés pour remplacer les contenus des cellules adressées par des mots d'adresse dans lesquels X = 0 et Y = Y.

**3.** Dispositif de multiplication (300) selon la revendication 1 ou 2,
**caractérisé en ce que**
les contenus des cellules dans la zone de mémoire (310) adressées par des mots d'adresse dans lesquels X ≥ M/2 ont été déplacés pour remplacer les contenus des cellules adressées par des mots d'adresse dans lesquels X = M - 1 - X et Y = M - 1 - Y.

**4.** Dispositif de multiplication (300) selon la revendication 1,
**caractérisé en ce que**
ladite unité d'adresse (320) est agencée pour échanger les positions de la première moitié du mot d'adresse et de la deuxième moitié du mot d'adresse, et pour réacheminer le mot d'adresse vers la zone de mémoire (310).

**5.** Dispositif de multiplication (300) selon la revendication 2,
**caractérisé en ce que**
l'unité de sortie (330) est agencée pour mettre le produit P à zéro lorsque X = 0 ou Y = 0.

**6.** Dispositif de multiplication (300) selon la revendication 2,
**caractérisé en ce que**
ladite unité d'adresse (320) est agencée pour

- échanger les positions desdits premier et deuxième nombres d'adresse X et Y si Y < X, et pour mettre X à zéro si X = Y, et
- réacheminer les nombres d'adresse **X**, Y vers la zone de mémoire (310).

**7.** Dispositif de multiplication (300) selon la revendication 3,
**caractérisé en ce que**
ladite unité d'adresse (320) est agencée pour

- échanger les positions desdits premier et deuxième nombres d'adresse X et Y si Y < X, mettre X à zéro si X = Y,
- inverser les premier et deuxième nombres X et Y si le bit le plus significatif du premier nombre X est positionné, et
- réacheminer les nombres d'adresse X, Y vers la zone de mémoire (310).

**8.** Procédé pour adresser un dispositif de multiplication (300) comprenant :

- une unité d'adresse (320) adaptée pour recevoir des mots d'adresse d'un système externe, lesquels mots d'adresse ont une première partie comprenant un premier nombre X et une deuxième partie comprenant un deuxième nombre Y,
- une zone de mémoire (310) comprenant M x M cellules de mémoire agencées pour être adressées par lesdits mots d'adresse, dans lequel une cellule adressée par un mot d'adresse particulier est pourvue du produit P des premier et deuxième nombres X et Y du mot d'adresse, et

- une unité de sortie (330) adaptée pour fournir des produits P de la zone de mémoire (320) à un système externe, comprenant les étapes consistant à :
- retirer les cellules de la zone de mémoire (310) qui sont adressées par des mots d'adresse dans lesquels Y < X,
- recevoir un mot d'adresse dudit système externe,
- échanger les positions desdits premier et deuxième nombres X et Y dans ledit mot d'adresse si Y < X, et
- réacheminer les nombres X, Y du mot d'adresse vers la zone de mémoire (310).

**9.** Procédé selon la revendication 8, comprenant l'étape consistant à :

échanger les positions de la première moitié et de la deuxième moitié du mot d'adresse reçu.

**10.** Procédé selon la revendication 8 ou 9, comprenant l'étape consistant à :

- mettre le produit P à zéro lorsque X = 0 ou Y = 0, et
- acheminer le produit P vers l'unité de sortie (330).

**11.** Procédé selon la revendication 8, comprenant les étapes consistant à :

- déplacer les contenus des cellules de la zone de mémoire (310) adressées par des mots d'adresse dans lesquels X = Y vers les cellules adressées par des mots d'adresse dans lesquels X = 0 et Y = Y,
- mettre le nombre d'adresse X dans le mot d'adresse reçu à zéro si X = Y,
- réacheminer les nombres d'adresse X, Y vers la zone de mémoire (310).

**12.** Procédé selon la revendication 11, comprenant les étapes consistant à :

- déplacer le contenu des cellules adressées par des mots d'adresse dans lesquels X≥ M/2 pour remplacer les contenus des cellules adressées par des mots d'adresse dans lesquels X = M - 1 - X et Y = M - 1 - Y.
- inverser les premier et deuxième nombres X et Y dans l'adresse reçue si le bit le plus significatif du premier nombre X est positionné,
- réacheminer les nombres d'adresse X, Y vers la zone de mémoire (310).

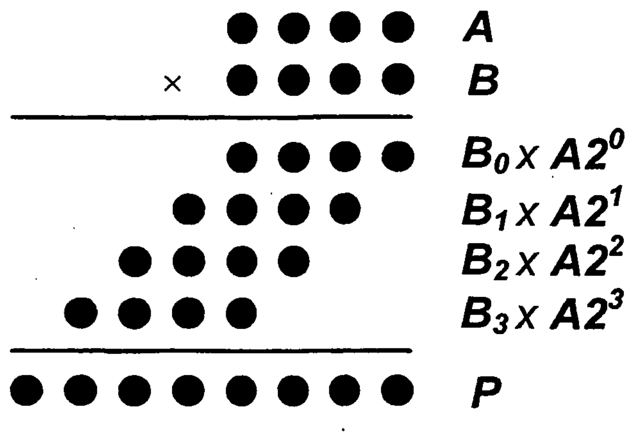


Fig. 1

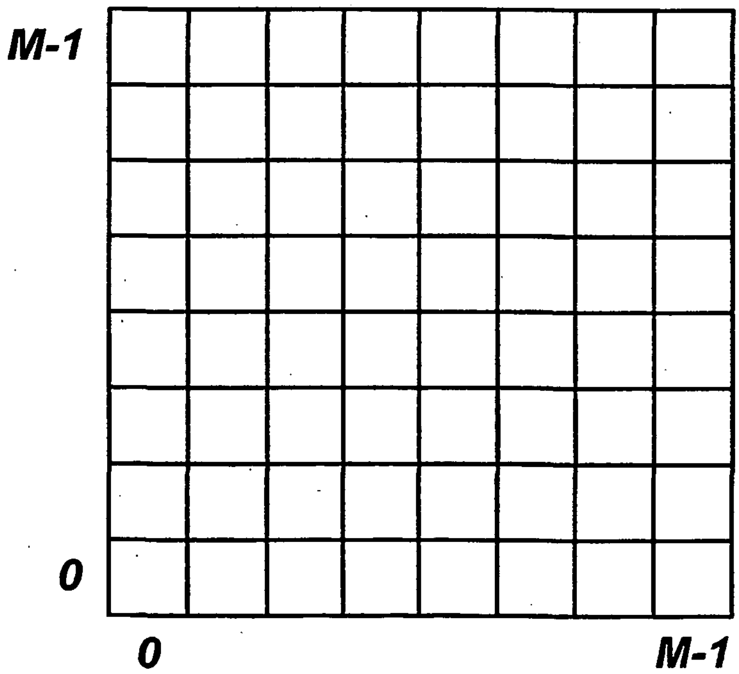


Fig. 2

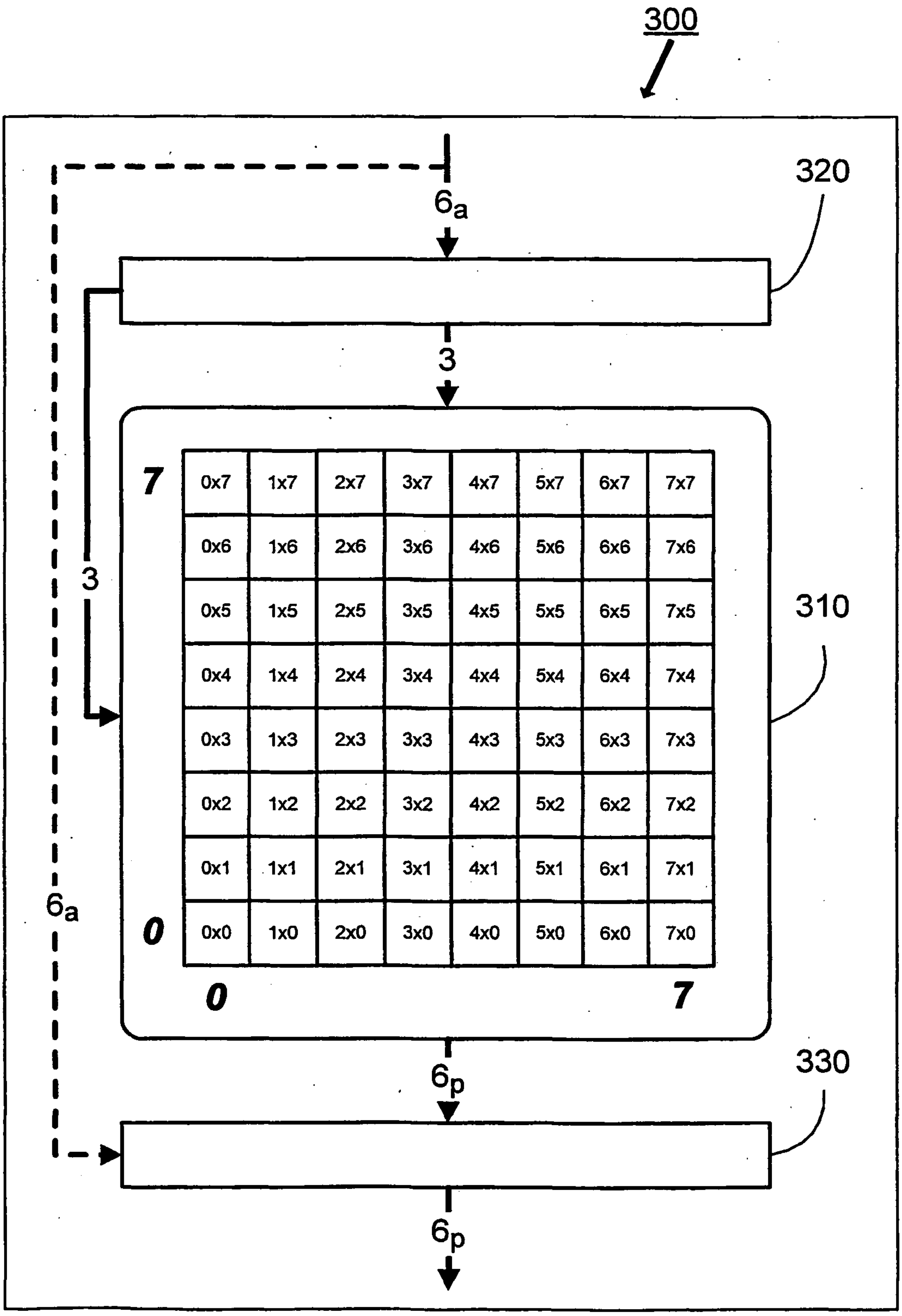
300
320
6a
3
3
7
0
0
7
0x7
1x7
2x7
3x7
4x7
5x7
6x7
7x7
0x6
1x6
2x6
3x6
4x6
5x6
6x6
7x6
0x5
1x5
2x5
3x5
4x5
5x5
6x5
7x5
0x4
1x4
2x4
3x4
4x4
5x4
6x4
7x4
0x3
1x3
2x3
3x3
4x3
5x3
6x3
7x3
0x2
1x2
2x2
3x2
4x2
5x2
6x2
7x2
0x1
1x1
2x1
3x1
4x1
5x1
6x1
7x1
0x0
1x0
2x0
3x0
4x0
5x0
6x0
7x0
310
6a
6p
330
6p

**Fig. 3**

| Address-Bus (6 bits, binary) | | Addr. | M1 | M2 | P |
|---|---|---|---|---|---|
| X 1st half (3 bits, binary) | Y 2nd half (3 bits, binary) | | | | |
| C0 | | | | | |
| 000 | 000 | 0 | 0 | 0 | 0 |
| 000 | 001 | 1 | 0 | 1 | 0 |
| 000 | 010 | 2 | 0 | 2 | 0 |
| 000 | 011 | 3 | 0 | 3 | 0 |
| 000 | 100 | 4 | 0 | 4 | 0 |
| 000 | 101 | 5 | 0 | 5 | 0 |
| 000 | 110 | 6 | 0 | 6 | 0 |
| 000 | 111 | 7 | 0 | 7 | 0 |
| C1 | | | | | |
| 001 | 000 | 8 | 1 | 0 | 0 |
| 001 | 001 | 9 | 1 | 1 | 1 |
| 001 | 010 | 10 | 1 | 2 | 2 |
| 001 | 011 | 11 | 1 | 3 | 3 |
| 001 | 100 | 12 | 1 | 4 | 4 |
| 001 | 101 | 13 | 1 | 5 | 5 |
| 001 | 110 | 14 | 1 | 6 | 6 |
| 001 | 111 | 15 | 1 | 7 | 7 |
| C2 | | | | | |
| 010 | 000 | 16 | 2 | 0 | 0 |
| 010 | 001 | 17 | 2 | 1 | 2 |
| 010 | 010 | 18 | 2 | 2 | 4 |
| 010 | 011 | 19 | 2 | 3 | 6 |
| 010 | 100 | 20 | 2 | 4 | 8 |
| 010 | 101 | 21 | 2 | 5 | 10 |
| 010 | 110 | 22 | 2 | 6 | 12 |
| 010 | 111 | 23 | 2 | 7 | 14 |
| C3 | | | | | |
| 011 | 000 | 24 | 3 | 0 | 0 |
| 011 | 001 | 25 | 3 | 1 | 3 |
| 011 | 010 | 26 | 3 | 2 | 6 |
| 011 | 011 | 27 | 3 | 3 | 9 |
| 011 | 100 | 28 | 3 | 4 | 12 |
| 011 | 101 | 29 | 3 | 5 | 15 |
| 011 | 110 | 30 | 3 | 6 | 18 |
| 011 | 111 | 31 | 3 | 7 | 21 |
| C4 | | | | | |
| 100 | 000 | 32 | 4 | 0 | 0 |
| 100 | 001 | 33 | 4 | 1 | 4 |
| 100 | 010 | 34 | 4 | 2 | 8 |
| 100 | 011 | 35 | 4 | 3 | 12 |
| 100 | 100 | 36 | 4 | 4 | 16 |
| 100 | 101 | 37 | 4 | 5 | 20 |
| 100 | 110 | 38 | 4 | 6 | 24 |
| 100 | 111 | 39 | 4 | 7 | 28 |
| C5 | | | | | |
| 101 | 000 | 40 | 5 | 0 | 0 |
| 101 | 001 | 41 | 5 | 1 | 5 |
| 101 | 010 | 42 | 5 | 2 | 10 |
| 101 | 011 | 43 | 5 | 3 | 15 |
| 101 | 100 | 44 | 5 | 4 | 20 |
| 101 | 101 | 45 | 5 | 5 | 25 |
| 101 | 110 | 46 | 5 | 6 | 30 |
| 101 | 111 | 47 | 5 | 7 | 35 |
| C6 | | | | | |
| 110 | 000 | 48 | 6 | 0 | 0 |
| 110 | 001 | 49 | 6 | 1 | 6 |
| 110 | 010 | 50 | 6 | 2 | 12 |
| 110 | 011 | 51 | 6 | 3 | 18 |
| 110 | 100 | 52 | 6 | 4 | 24 |
| 110 | 101 | 53 | 6 | 5 | 30 |
| 110 | 110 | 54 | 6 | 6 | 36 |
| 110 | 111 | 55 | 6 | 7 | 42 |
| C7 | | | | | |
| 111 | 000 | 56 | 7 | 0 | 0 |
| 111 | 001 | 57 | 7 | 1 | 7 |
| 111 | 010 | 58 | 7 | 2 | 14 |
| 111 | 011 | 59 | 7 | 3 | 21 |
| 111 | 100 | 60 | 7 | 4 | 28 |
| 111 | 101 | 61 | 7 | 5 | 35 |
| 111 | 110 | 62 | 7 | 6 | 42 |
| 111 | 111 | 63 | 7 | 7 | 49 |

**Fig. 4**

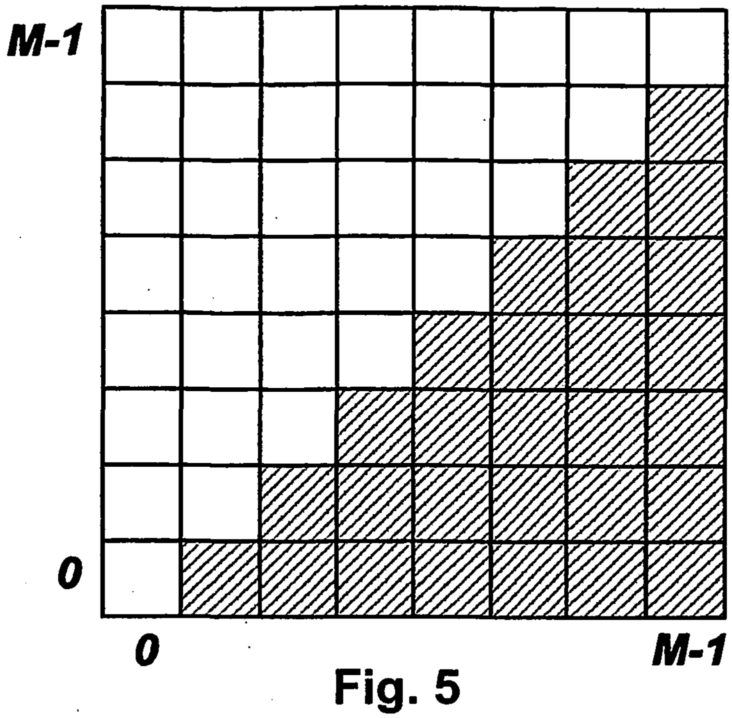
M-1
0
0
M-1

Fig. 5

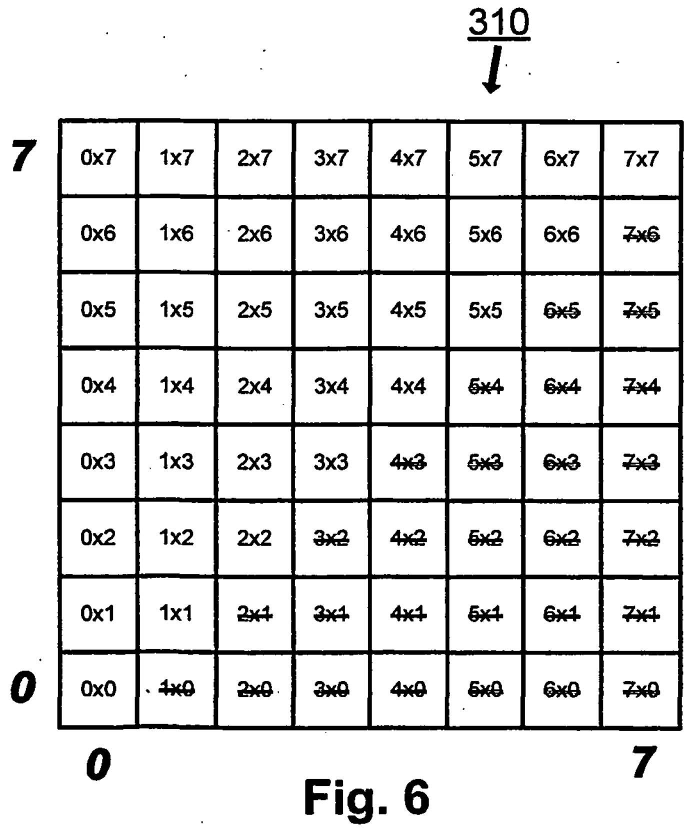
310
7
0x7 1x7 2x7 3x7 4x7 5x7 6x7 7x7
0x6 1x6 2x6 3x6 4x6 5x6 6x6 ~~7x6~~
0x5 1x5 2x5 3x5 4x5 5x5 ~~6x5~~ ~~7x5~~
0x4 1x4 2x4 3x4 4x4 ~~5x4~~ ~~6x4~~ ~~7x4~~
0x3 1x3 2x3 3x3 ~~4x3~~ ~~5x3~~ ~~6x3~~ ~~7x3~~
0x2 1x2 2x2 ~~3x2~~ ~~4x2~~ ~~5x2~~ ~~6x2~~ ~~7x2~~
0x1 1x1 ~~2x1~~ ~~3x1~~ ~~4x1~~ ~~5x1~~ ~~6x1~~ ~~7x1~~
0x0 ~~1x0~~ ~~2x0~~ ~~3x0~~ ~~4x0~~ ~~5x0~~ ~~6x0~~ ~~7x0~~
0
0
7

Fig. 6

| Address-Bus (6 bits, binary) | | Addr. | M1 | M2 | P |
|---|---|---|---|---|---|
| X 1st half (3 bits, binary) | Y 2nd half (3 bits, binary) | | | | |
| C0 | | | | | |
| 000 | 000 | 0 | 0 | 0 | 0 |
| 000 | 001 | 1 | 0 | 1 | 0 |
| 000 | 010 | 2 | 0 | 2 | 0 |
| 000 | 011 | 3 | 0 | 3 | 0 |
| 000 | 100 | 4 | 0 | 4 | 0 |
| 000 | 101 | 5 | 0 | 5 | 0 |
| 000 | 110 | 6 | 0 | 6 | 0 |
| 000 | 111 | 7 | 0 | 7 | 0 |
| C1 | | | | | |
| ~~001~~ | ~~000~~ | ~~8~~ | ~~1~~ | ~~0~~ | ~~0~~ |
| 001 | 001 | 9 | 1 | 1 | 1 |
| 001 | 010 | 10 | 1 | 2 | 2 |
| 001 | 011 | 11 | 1 | 3 | 3 |
| 001 | 100 | 12 | 1 | 4 | 4 |
| 001 | 101 | 13 | 1 | 5 | 5 |
| 001 | 110 | 14 | 1 | 6 | 6 |
| 001 | 111 | 15 | 1 | 7 | 7 |
| C2 | | | | | |
| ~~010~~ | ~~000~~ | ~~16~~ | ~~2~~ | ~~0~~ | ~~0~~ |
| ~~010~~ | ~~001~~ | ~~17~~ | ~~2~~ | ~~1~~ | ~~2~~ |
| 010 | 010 | 18 | 2 | 2 | 4 |
| 010 | 011 | 19 | 2 | 3 | 6 |
| 010 | 100 | 20 | 2 | 4 | 8 |
| 010 | 101 | 21 | 2 | 5 | 10 |
| 010 | 110 | 22 | 2 | 6 | 12 |
| 010 | 111 | 23 | 2 | 7 | 14 |
| C3 | | | | | |
| ~~011~~ | ~~000~~ | ~~24~~ | ~~3~~ | ~~0~~ | ~~0~~ |
| ~~011~~ | ~~001~~ | ~~25~~ | ~~3~~ | ~~1~~ | ~~3~~ |
| ~~011~~ | ~~010~~ | ~~26~~ | ~~3~~ | ~~2~~ | ~~6~~ |
| 011 | 011 | 27 | 3 | 3 | 9 |
| 011 | 100 | 28 | 3 | 4 | 12 |
| 011 | 101 | 29 | 3 | 5 | 15 |
| 011 | 110 | 30 | 3 | 6 | 18 |
| 011 | 111 | 31 | 3 | 7 | 21 |

| | | | | | |
|---|---|---|---|---|---|
| C4 | | | | | |
| ~~100~~ | ~~000~~ | ~~32~~ | 4 | ~~0~~ | ~~0~~ |
| ~~100~~ | ~~001~~ | ~~33~~ | 4 | ~~1~~ | 4 |
| ~~100~~ | ~~010~~ | ~~34~~ | 4 | ~~2~~ | ~~8~~ |
| ~~100~~ | ~~011~~ | ~~35~~ | 4 | ~~3~~ | ~~12~~ |
| 100 | 100 | 36 | 4 | 4 | 16 |
| 100 | 101 | 37 | 4 | 5 | 20 |
| 100 | 110 | 38 | 4 | 6 | 24 |
| 100 | 111 | 39 | 4 | 7 | 28 |
| C5 | | | | | |
| ~~101~~ | ~~000~~ | ~~40~~ | ~~5~~ | ~~0~~ | ~~0~~ |
| ~~101~~ | ~~001~~ | ~~41~~ | ~~5~~ | ~~1~~ | ~~5~~ |
| ~~101~~ | ~~010~~ | ~~42~~ | ~~5~~ | ~~2~~ | ~~10~~ |
| ~~101~~ | ~~011~~ | ~~43~~ | ~~5~~ | ~~3~~ | ~~15~~ |
| ~~101~~ | ~~100~~ | ~~44~~ | ~~5~~ | 4 | ~~20~~ |
| 101 | 101 | 45 | 5 | 5 | 25 |
| 101 | 110 | 46 | 5 | 6 | 30 |
| 101 | 111 | 47 | 5 | 7 | 35 |
| C6 | | | | | |
| ~~110~~ | ~~000~~ | ~~48~~ | ~~6~~ | ~~0~~ | ~~0~~ |
| ~~110~~ | ~~001~~ | ~~49~~ | ~~6~~ | ~~1~~ | ~~6~~ |
| ~~110~~ | ~~010~~ | ~~50~~ | ~~6~~ | ~~2~~ | ~~12~~ |
| ~~110~~ | ~~011~~ | ~~51~~ | ~~6~~ | ~~3~~ | ~~18~~ |
| ~~110~~ | ~~100~~ | ~~52~~ | ~~6~~ | 4 | ~~24~~ |
| ~~110~~ | ~~101~~ | ~~53~~ | ~~6~~ | ~~5~~ | ~~30~~ |
| 110 | 110 | 54 | 6 | 6 | 36 |
| 110 | 111 | 55 | 6 | 7 | 42 |
| C7 | | | | | |
| ~~111~~ | ~~000~~ | ~~56~~ | ~~7~~ | ~~0~~ | ~~0~~ |
| ~~111~~ | ~~001~~ | ~~57~~ | ~~7~~ | ~~1~~ | ~~7~~ |
| ~~111~~ | ~~010~~ | ~~58~~ | ~~7~~ | ~~2~~ | ~~14~~ |
| ~~111~~ | ~~011~~ | ~~59~~ | ~~7~~ | ~~3~~ | ~~21~~ |
| ~~111~~ | ~~100~~ | ~~60~~ | ~~7~~ | 4 | ~~28~~ |
| ~~111~~ | ~~101~~ | ~~61~~ | ~~7~~ | ~~5~~ | ~~35~~ |
| ~~111~~ | ~~110~~ | ~~62~~ | ~~7~~ | ~~6~~ | ~~42~~ |
| 111 | 111 | 63 | 7 | 7 | 49 |

**Fig. 7**

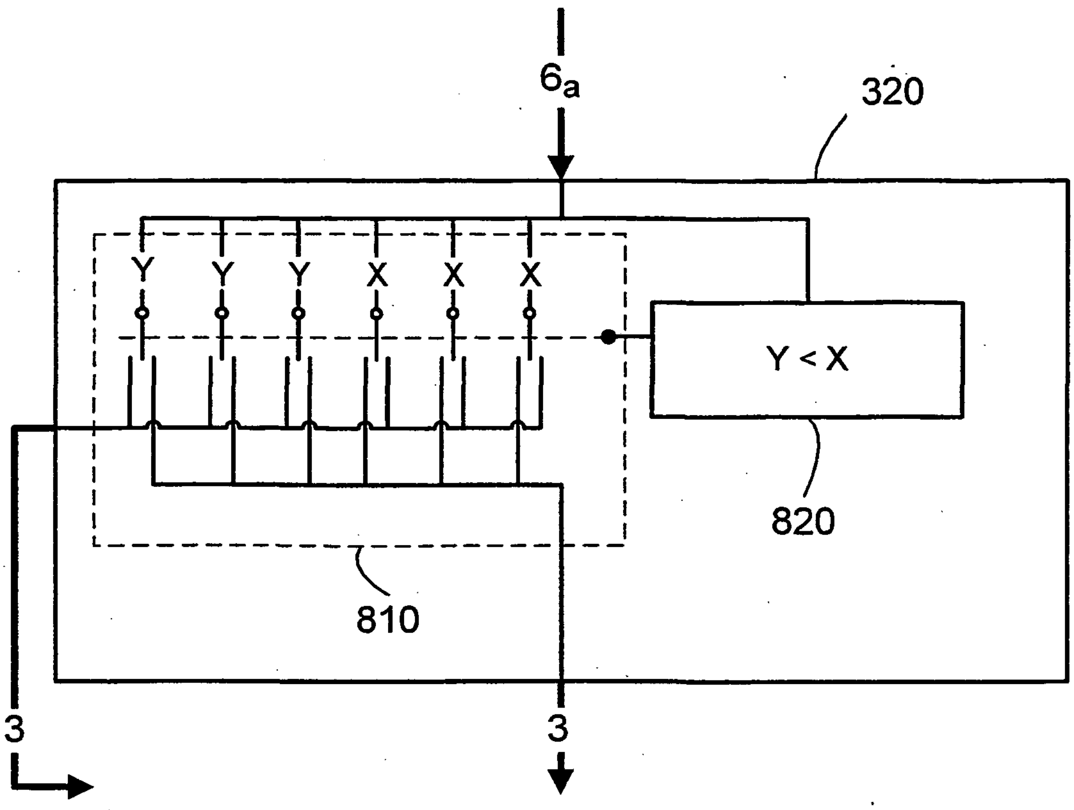


Fig. 8

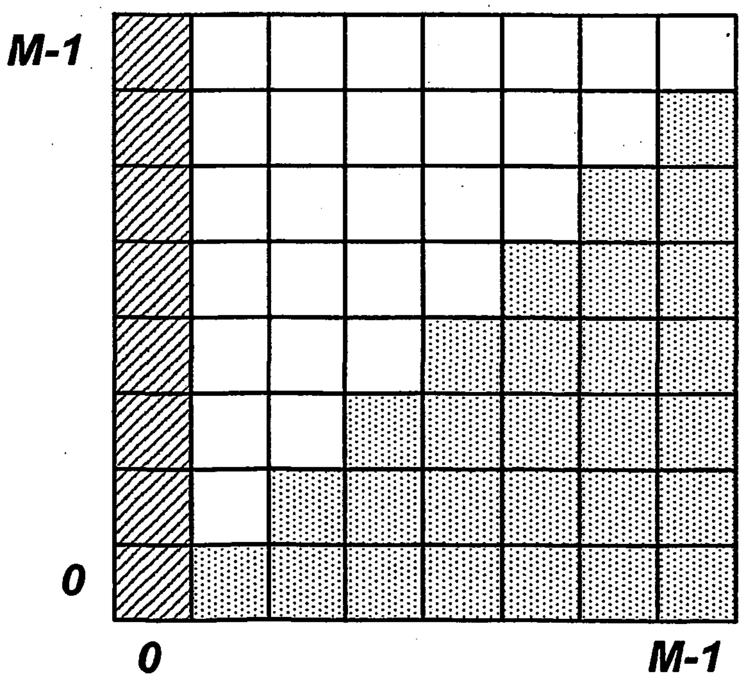


Fig. 9

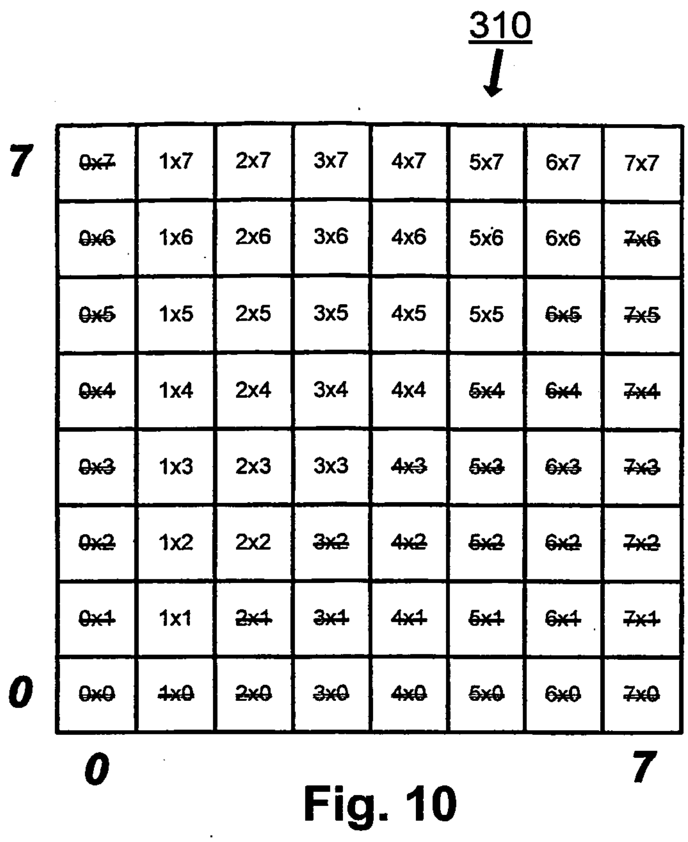
310
7
0x7 1x7 2x7 3x7 4x7 5x7 6x7 7x7
0x6 1x6 2x6 3x6 4x6 5x6 6x6 7x6
0x5 1x5 2x5 3x5 4x5 5x5 6x5 7x5
0x4 1x4 2x4 3x4 4x4 5x4 6x4 7x4
0x3 1x3 2x3 3x3 4x3 5x3 6x3 7x3
0x2 1x2 2x2 3x2 4x2 5x2 6x2 7x2
0x1 1x1 2x1 3x1 4x1 5x1 6x1 7x1
0x0 1x0 2x0 3x0 4x0 5x0 6x0 7x0
0
0
7

Fig. 10

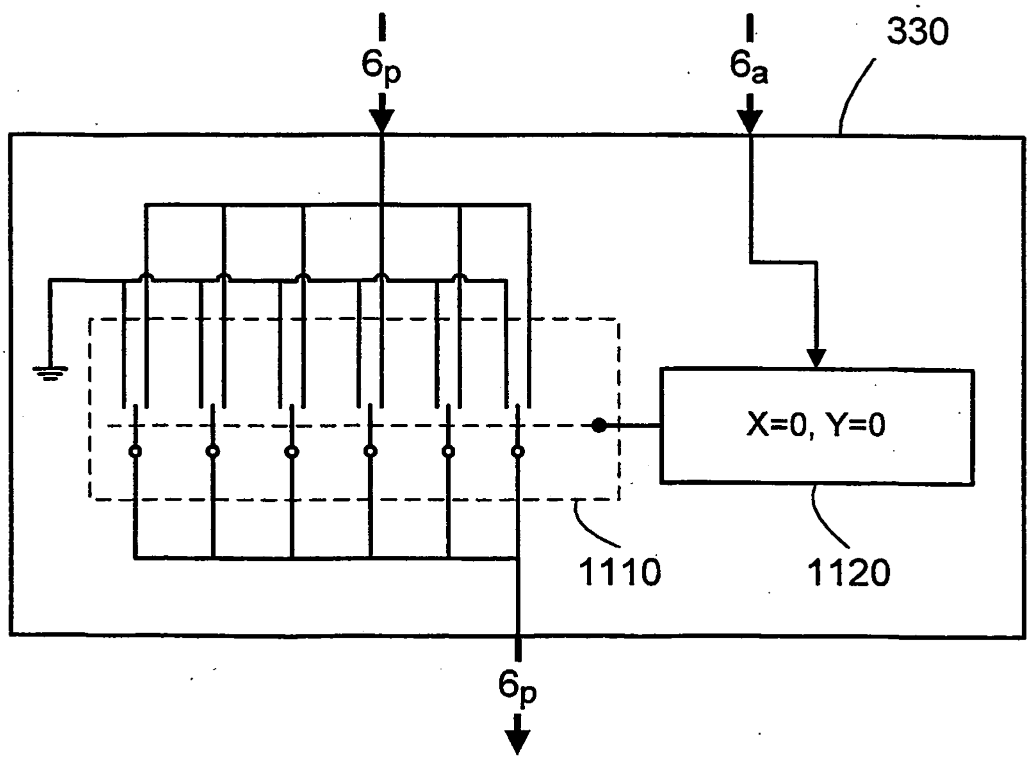
$6_p$
$6_a$
330
X=0, Y=0
1110
1120
$6_p$

Fig. 11

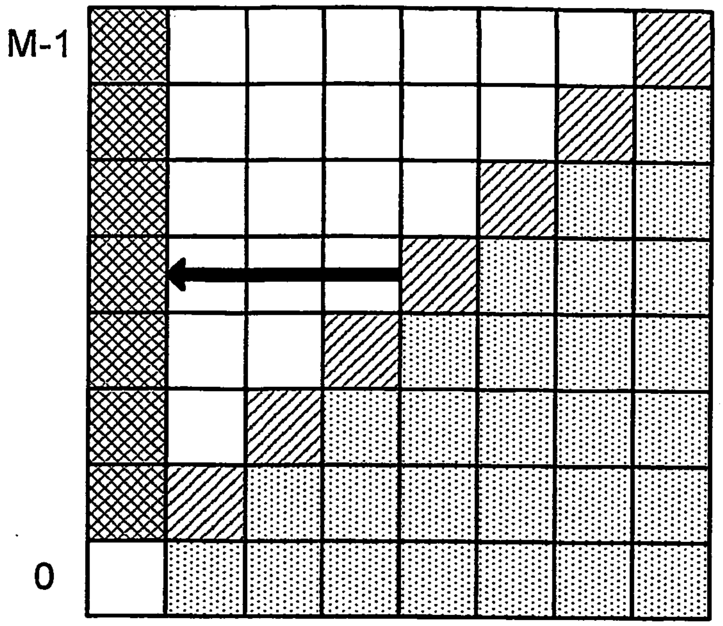
M-1
0
0
M-1

Fig. 12

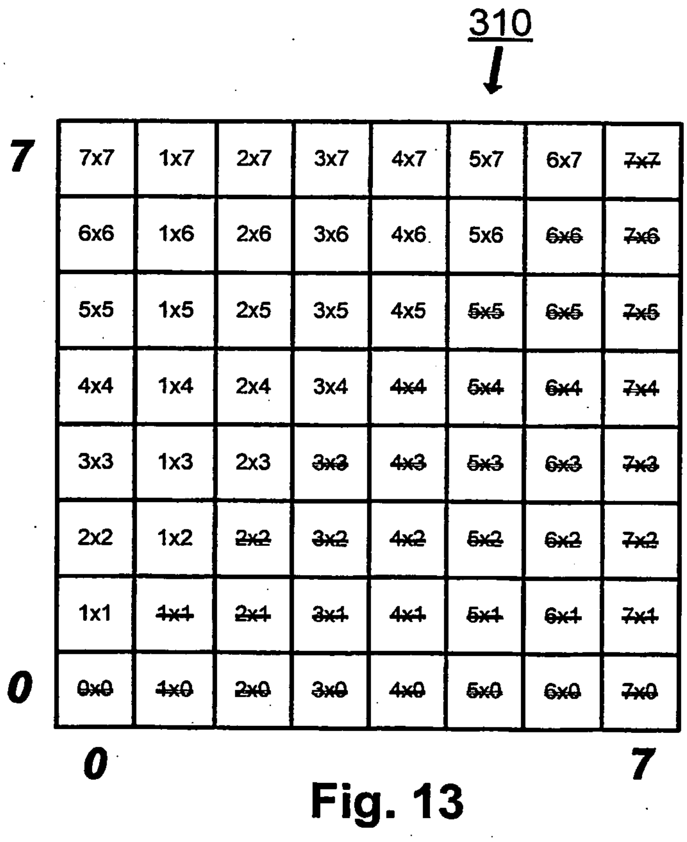
310
7
0
0
7
7x7 1x7 2x7 3x7 4x7 5x7 6x7 7x7
6x6 1x6 2x6 3x6 4x6 5x6 6x6 7x6
5x5 1x5 2x5 3x5 4x5 5x5 6x5 7x5
4x4 1x4 2x4 3x4 4x4 5x4 6x4 7x4
3x3 1x3 2x3 3x3 4x3 5x3 6x3 7x3
2x2 1x2 2x2 3x2 4x2 5x2 6x2 7x2
1x1 1x1 2x1 3x1 4x1 5x1 6x1 7x1
0x0 1x0 2x0 3x0 4x0 5x0 6x0 7x0

Fig. 13

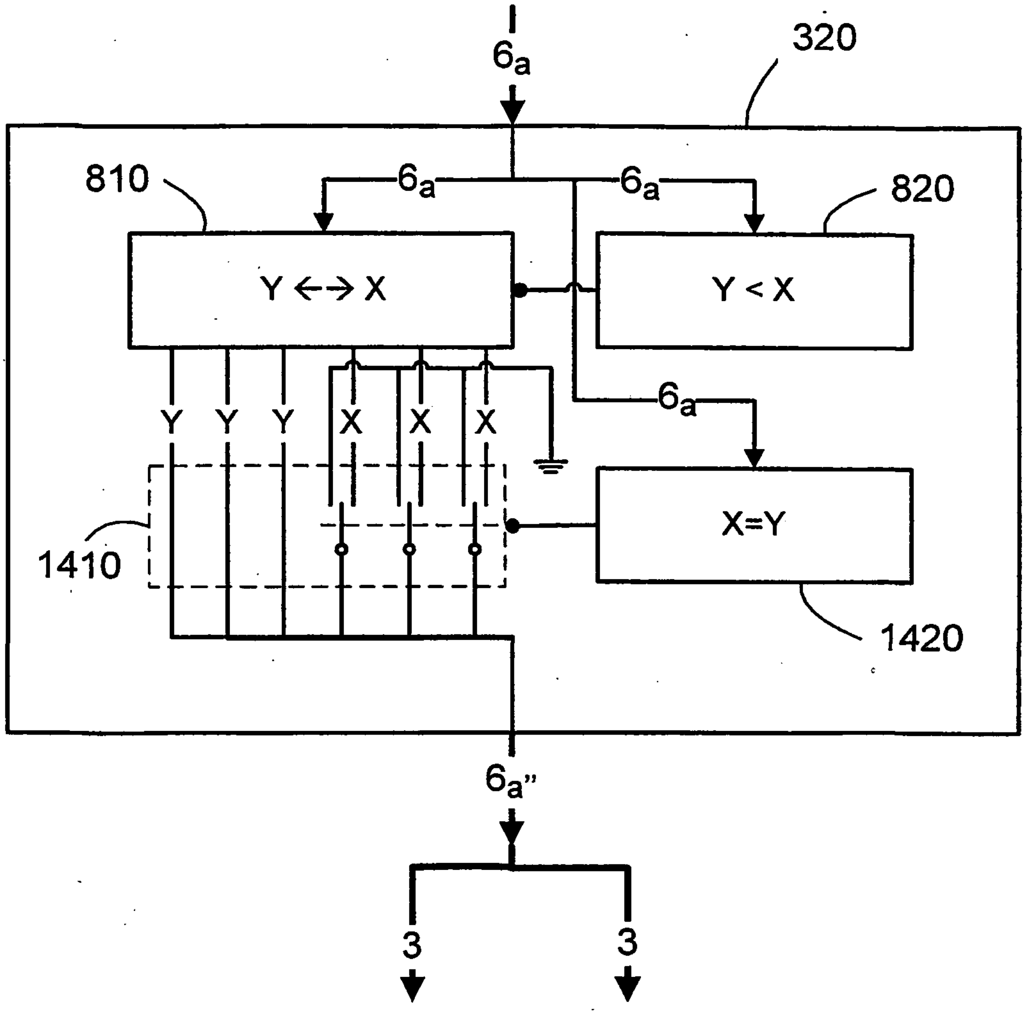


Fig. 14

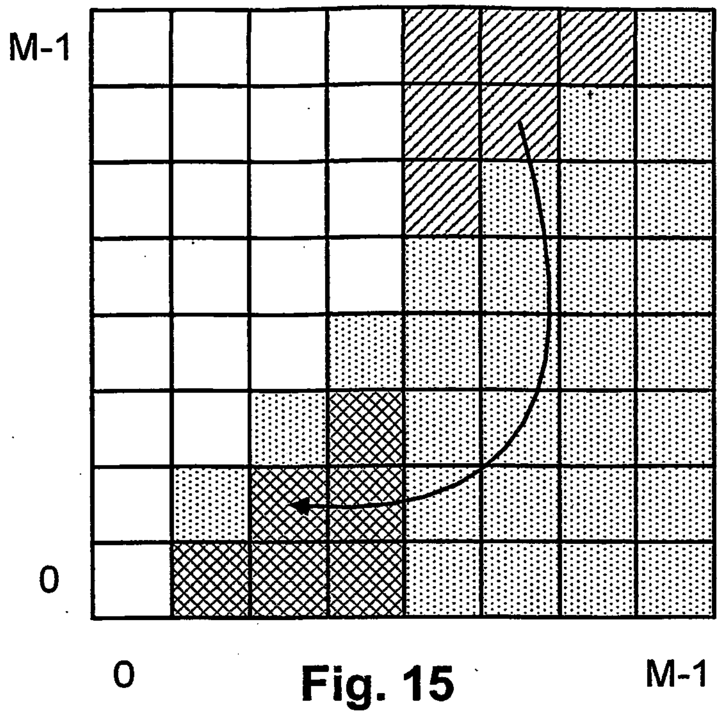
M-1
0
0
M-1

Fig. 15

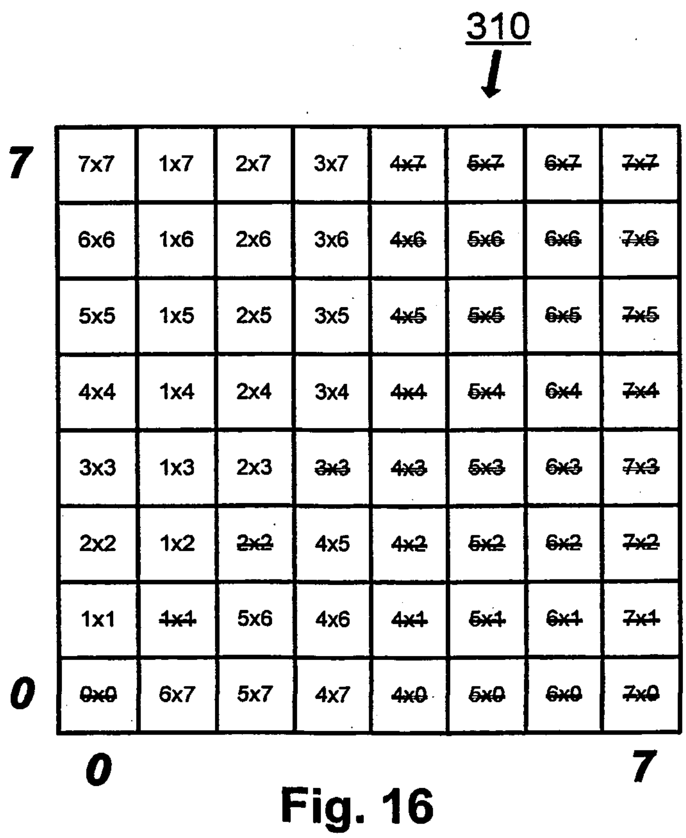
310
7
7x7 1x7 2x7 3x7 4x7 5x7 6x7 7x7
6x6 1x6 2x6 3x6 4x6 5x6 6x6 7x6
5x5 1x5 2x5 3x5 4x5 5x5 6x5 7x5
4x4 1x4 2x4 3x4 4x4 5x4 6x4 7x4
3x3 1x3 2x3 3x3 4x3 5x3 6x3 7x3
2x2 1x2 2x2 4x5 4x2 5x2 6x2 7x2
1x1 1x1 5x6 4x6 4x1 5x1 6x1 7x1
0x0 6x7 5x7 4x7 4x0 5x0 6x0 7x0
0
0
7

Fig. 16

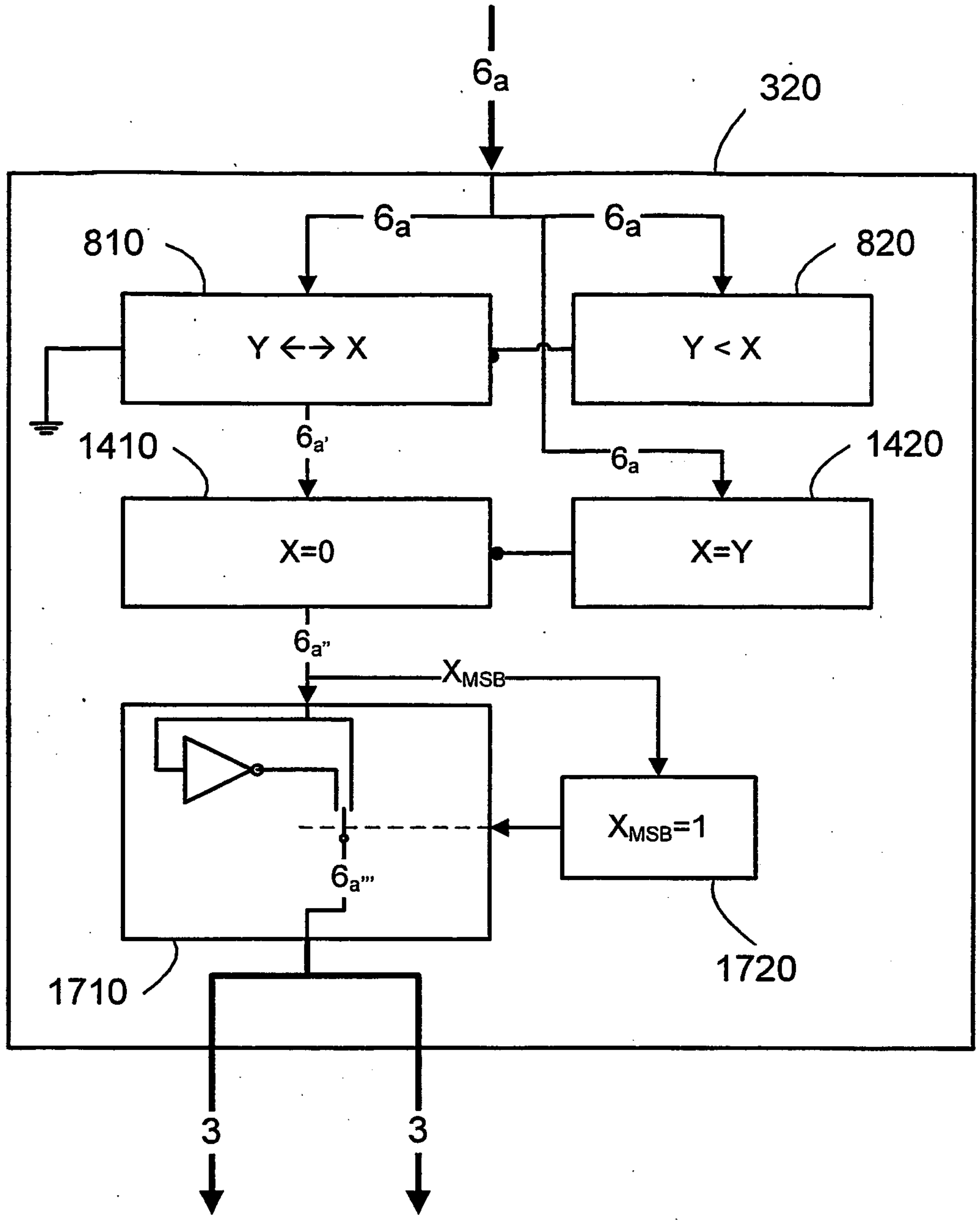
6a
320
6a
6a
810
820
Y <-> X
Y < X
6a'
1410
6a
1420
X=0
X=Y
6a"
XMSB
XMSB=1
6a'"
1710
1720
3
3

Fig. 17

| Address-Bus (6 bits, binary) | | Addr. | M1 | M2 | P |
|---|---|---|---|---|---|
| X 1st half (3 bits, binary) | Y 2nd half (3 bits, binary) | | | | |
| C0 | | | | | |
| ~~000~~ | ~~000~~ | ~~0~~ | ~~0~~ | ~~0~~ | ~~0~~ |
| 000 | 001 | 1 | ~~0~~ 1 | 1 | ~~0~~ 1 |
| 000 | 010 | 2 | ~~0~~ 2 | 2 | ~~0~~ 4 |
| 000 | 011 | 3 | ~~0~~ 3 | 3 | ~~0~~ 9 |
| 000 | 100 | 4 | ~~0~~ 4 | 4 | ~~0~~ 16 |
| 000 | 101 | 5 | ~~0~~ 5 | 5 | ~~0~~ 25 |
| 000 | 110 | 6 | ~~0~~ 6 | 6 | ~~0~~ 36 |
| 000 | 111 | 7 | ~~0~~ 7 | 7 | ~~0~~ 49 |
| C1 | | | | | |
| 001 | 000 | 8 | ~~1~~ 6 | ~~0~~ 7 | ~~0~~ 42 |
| ~~001~~ | ~~001~~ | ~~9~~ | ~~1~~ | ~~1~~ | ~~1~~ |
| 001 | 010 | 10 | 1 | 2 | 2 |
| 001 | 011 | 11 | 1 | 3 | 3 |
| 001 | 100 | 12 | 1 | 4 | 4 |
| 001 | 101 | 13 | 1 | 5 | 5 |
| 001 | 110 | 14 | 1 | 6 | 6 |
| 001 | 111 | 15 | 1 | 7 | 7 |
| C2 | | | | | |
| 010 | 000 | 16 | ~~2~~ 5 | ~~0~~ 7 | ~~0~~ 35 |
| 010 | 001 | 17 | ~~2~~ 5 | ~~1~~ 6 | ~~2~~ 30 |
| ~~010~~ | ~~010~~ | ~~18~~ | ~~2~~ | ~~2~~ | 4 |
| 010 | 011 | 19 | 2 | 3 | 6 |
| 010 | 100 | 20 | 2 | 4 | 8 |
| 010 | 101 | 21 | 2 | 5 | 10 |
| 010 | 110 | 22 | 2 | 6 | 12 |
| 010 | 111 | 23 | 2 | 7 | 14 |
| C3 | | | | | |
| 011 | 000 | 24 | ~~3~~ 4 | ~~0~~ 7 | ~~0~~ 28 |
| 011 | 001 | 25 | ~~3~~ 4 | ~~1~~ 6 | ~~3~~ 24 |
| 011 | 010 | 26 | ~~3~~ 4 | ~~2~~ 5 | ~~6~~ 20 |
| ~~011~~ | ~~011~~ | ~~27~~ | ~~3~~ | ~~3~~ | ~~9~~ |
| 011 | 100 | 28 | 3 | 4 | 12 |
| 011 | 101 | 29 | 3 | 5 | 15 |
| 011 | 110 | 30 | 3 | 6 | 18 |
| 011 | 111 | 31 | 3 | 7 | 21 |

| | | | | | |
|---|---|---|---|---|---|
| C4 | | | | | |
| ~~100~~ | ~~000~~ | ~~32~~ | ~~4~~ | ~~0~~ | ~~0~~ |
| ~~100~~ | ~~001~~ | ~~33~~ | ~~4~~ | ~~1~~ | 4 |
| ~~100~~ | ~~010~~ | ~~34~~ | ~~4~~ | ~~2~~ | ~~8~~ |
| ~~100~~ | ~~011~~ | ~~35~~ | ~~4~~ | ~~3~~ | ~~12~~ |
| ~~100~~ | ~~100~~ | ~~36~~ | ~~4~~ | 4 | ~~16~~ |
| ~~100~~ | ~~101~~ | ~~37~~ | ~~4~~ | ~~5~~ | ~~20~~ |
| ~~100~~ | ~~110~~ | ~~38~~ | ~~4~~ | ~~6~~ | ~~24~~ |
| ~~100~~ | ~~111~~ | ~~39~~ | ~~4~~ | ~~7~~ | ~~28~~ |
| C5 | | | | | |
| ~~101~~ | ~~000~~ | ~~40~~ | ~~5~~ | ~~0~~ | ~~0~~ |
| ~~101~~ | ~~001~~ | ~~41~~ | ~~5~~ | ~~1~~ | ~~5~~ |
| ~~101~~ | ~~010~~ | ~~42~~ | ~~5~~ | ~~2~~ | ~~10~~ |
| ~~101~~ | ~~011~~ | ~~43~~ | ~~5~~ | ~~3~~ | ~~15~~ |
| ~~101~~ | ~~100~~ | ~~44~~ | ~~5~~ | 4 | ~~20~~ |
| ~~101~~ | ~~101~~ | ~~45~~ | ~~5~~ | ~~5~~ | ~~25~~ |
| ~~101~~ | ~~110~~ | ~~46~~ | ~~5~~ | ~~6~~ | ~~30~~ |
| ~~101~~ | ~~111~~ | ~~47~~ | ~~5~~ | ~~7~~ | ~~35~~ |
| C6 | | | | | |
| ~~110~~ | ~~000~~ | ~~48~~ | ~~6~~ | ~~0~~ | ~~0~~ |
| ~~110~~ | ~~001~~ | ~~49~~ | ~~6~~ | ~~1~~ | ~~6~~ |
| ~~110~~ | ~~010~~ | ~~50~~ | ~~6~~ | ~~2~~ | ~~12~~ |
| ~~110~~ | ~~011~~ | ~~51~~ | ~~6~~ | ~~3~~ | ~~18~~ |
| ~~110~~ | ~~100~~ | ~~52~~ | ~~6~~ | 4 | ~~24~~ |
| ~~110~~ | ~~101~~ | ~~53~~ | ~~6~~ | ~~5~~ | ~~30~~ |
| ~~110~~ | ~~110~~ | ~~54~~ | ~~6~~ | ~~6~~ | ~~36~~ |
| ~~110~~ | ~~111~~ | ~~55~~ | ~~6~~ | ~~7~~ | ~~42~~ |
| C7 | | | | | |
| ~~111~~ | ~~000~~ | ~~56~~ | ~~7~~ | ~~0~~ | ~~0~~ |
| ~~111~~ | ~~001~~ | ~~57~~ | ~~7~~ | ~~1~~ | ~~7~~ |
| ~~111~~ | ~~010~~ | ~~58~~ | ~~7~~ | ~~2~~ | ~~14~~ |
| ~~111~~ | ~~011~~ | ~~59~~ | ~~7~~ | ~~3~~ | ~~21~~ |
| ~~111~~ | ~~100~~ | ~~60~~ | ~~7~~ | 4 | ~~28~~ |
| ~~111~~ | ~~101~~ | ~~61~~ | ~~7~~ | ~~5~~ | ~~35~~ |
| ~~111~~ | ~~110~~ | ~~62~~ | ~~7~~ | ~~6~~ | ~~42~~ |
| ~~111~~ | ~~111~~ | ~~63~~ | ~~7~~ | ~~7~~ | ~~49~~ |

**Fig. 18**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5617346 A